# EUROPEAN PATENT APPLICATION

(11) **EP 4 414 700 A1**
(43) Date of publication of application: **14.08.2024**
(21) Application number: 23382111.5
(22) Date of filing: 07.02.2023
(51) Int. Cl.: G01N 27/407, G01N 27/27

(54) **A METHOD OF DETERMINING HYDROGEN PEROXIDE WITH A MULTIPLEX ELECTROCHEMICAL SENSOR**

(71) Applicant: Universitat Rovira I Virgili (URV), 43003 Tarragona (ES)
(72) Inventor: ANDRADE, Francisco Javier, 43003 Tarragona (ES); BLANKING, Pär Robert Erik William, 43003 Tarragona (ES); BLONDEAU, Pascal, 43003 Tarragona (ES)
(74) Representative: Hoffmann Eitle

(57) **Abstract**

A hydrogen peroxide sensitive self-powered cell wherein the working (front) electrode and the counter (back) electrode are connected through an electrolytic conductor bridge, and the working electrode is porous so that it allows an aqueous solution to reach the electrolytic conductor bridge and eventually the counter electrode. Therefore, only the working electrode is exposed to the problem solution, achieving a full use of the exposed area as a current generation surface, increasing the sensitivity to hydrogen peroxide.

## Description

### Technical field of the invention

The present invention pertains to the life sciences, including medical, veterinary, botanic, well-being, nutrition, food manipulation, in-vivo diagnostics, in-vitro diagnostics and prognosis particularly to the determination of the presence and/or concentration of analytes in samples by using electrochemical sensors.

### Background of the invention

This discussion is believed to be helpful in providing the reader with background information to facilitate a better understanding of the various aspects of the present embodiments. Accordingly, it should be understood that these statements are to be read in this light, and not as admissions of prior art.

Electrochemical sensors can be used to detect chemical compounds in a solution (analytes). It is well known that any analyte that can be oxidized or reduced is a candidate for this type of detection.

The use of electrochemical sensors is common in different areas across the life-sciences industry. For example, electrochemical sensors can serve to monitor analytes in a human being either in a hospital (ICU monitoring) or out-of-hospital environment (wearables), tracking drugs and diseases in animals and plants to control epidemics, detecting viruses in all kind of animals, controlling nutrition values in humans and animals, tracking allergies, monitoring food processing and manufacturing contamination levels, as well as performing in-vitro diagnostics and prognosis of all kind.

A desired application of this electrochemical sensors has been the measurement of glucose. Diabetic people have the need to frequently measure and control their glucose levels in blood to ensure levels are maintained within a certain range. Therefore, several technologies have been developed in this direction, looking for ways to detect glucose in blood using electrochemical sensors, either amperometric or potentiometric cells.

Initially the use of hydrogen peroxide sensitive cells was developed, as glucose oxidase can easily oxidise glucose into hydrogen peroxide (H₂O₂) and is therefore a suitable marker of the presence and/or concentration of glucose in a determined solution, such as blood. With a simple glucose oxidase-based sensor, the following enzymatic reaction of glucose oxidase is exploited:

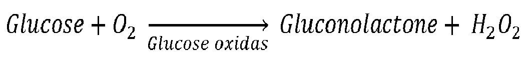

Then, the hydrogen peroxide (H₂O₂) is monitored using the electrochemical sensor, wherein the hydrogen peroxide is oxidised as follows:

*H₂O₂* → *2H⁺* + *O*₂ + 2*e⁻*

Next the current generated by the hydrogen peroxide oxidation can be associated to the concentration of glucose, as it is a byproduct of its decomposition catalysed by the glucose oxidase. The sensitivity of this method is limited by the exposed area of the working electrode to the electroactive substance, in this case the hydrogen peroxide. As the sensing device comprises the working electrode, the counter electrode and the reference electrode, only a fraction of the total area in contact with the solution serves as a redox active detection surface.

However, the direct amperometric detection of peroxide is complex. The materials that can be used - such as platinum- must be operated at a working potential that makes the sensor susceptible of serious interferences by redox-active species, such as ascorbic acid. One additional problem of the oxidase-based systems is the consumption of oxygen, which is required to produce H₂O₂. This has been typically overcome by the use of membranes that limit the flow of glucose and thus reduce the consumption of oxygen.

These problems have been the leitmotiv of the progress on this field that has given way to several "generations" of new sensors. The solutions proposed fall in one of the following strategies:
a. Using permselective membranes to protect the surface of the electrode, such as tetrafluoroethylene-perfluoro-3,6-dioxa-4-methyl-7-octenesulfonic acid copolymer. This is useful, but it is not totally effective and may reduce the sensitivity, as in amperometric sensors, the current is proportional to the surface of the working electrode. Coatings reduce such area, and therefore reduce the sensibility of the cell in this configuration.
b. Using redox mediators to reduce the working potential and improve the electron transfer efficiency.
c. Most of the approaches to detect glucose (classically based on H₂O₂) have tried to measure other type of enzyme-product analytes different to H₂O₂ in order to confront with the problem of ascorbic acid interferences. However, such approaches significantly reduce the sensitivity.

There is therefore a need for electrochemical cells sensitive to hydrogen peroxide that can overcome the interference problems with redox-active species and the consumption of oxygen of the oxidase-based systems without reducing the sensitivity. As the users of these systems are not medicalized, the obtention of blood requires an invasive method (such as a blood fingerprick, or a continuous monitoring system through needle) to obtain a sample where the glucose can be measured. There is therefore a need to increase the sensitivity of these systems as not just the quality of the measurement is increased, but also the experience can be made less uncomfortable for the user. Furthermore, if the glucometer amperometric sensor can be made independent of an external power source, smaller wearable devices, with better reliability can be achieved.

Further amperometric biosensors have achieved what it is known as self-powered sensors. These are amperometric sensors that employ the energy generated by a biochemical reaction in the solution to obtain the energy for functioning and therefore don't rely on external power sources. For example, a cholesterol self-powered biosensor has been achieved, in which both cathodic and anodic bio-electrocatalytic reactions are powered by the same substrate (Vagin et al, 2014. Analytical chemistry, 86(19), 9540-9547). It employed cholesterol oxidase to obtain hydrogen peroxide, which is reduced in the cathode using Prussian blue as a redox mediator, while the cholesterol is oxidized in the anode by mediated cholesterol oxidase. Also, it has already been described a miniature amperometric self-powered continuous glucose sensor (SPGS) with linear response (Liu et, al, Analytical Chemistry 2012 84 (7), 3403-3409). The system comprised a wired glucose oxidase anode; a Platinum/Carbon cathode; an overlying glucose flux-limiting membrane; and a resistor bridging the anode and cathode. In the anode, the glucose was decomposed into H₂O₂, which then was oxidized giving rise to hydrogen ions. On the other hand, the cathode reduced hydrogen ions and oxygen into water molecules. In a further self-powered glucometer implementation, the generated charge was transferred to a capacitor, whose voltage could be correlated to the concentration of glucose (Merino-Jimenez et al., 2021 Adv. Mater. Technol., Volume 6, Issue 5 200105). Also, a self-powering glucose biosensing system constructed by combining a bioanode and a biocathode with immobilized enzymes has been described (Slaughter et. al, Biosens Bioelectron. 2016; 78:45-50). It directly detected the electron transfer from the glucose and is constructed by combining a charge pump integrated circuit and a capacitor. Finally, another Prussian blue Based biosensor, achieved high performance with reduced noise when detecting hydrogen peroxide (Komkova et al, Anal. Chem. 2017, 89, 12, 6290-6294).

Although these self-powered electrodes overcame the need for a power source for the sensor to work, they were complex and still cannot increase significatively the exposed area that is sensing, i.e. the sensing area of the electrode was still a reduced part of the whole exposed area. In 2013, an amperometric sensor for measuring the amount of hydrogen peroxide (H₂O₂) present in a sample was described, comprising a working electrode in contact with a sensing solution, wherein the working electrode comprises a porous membrane structure (WO 2013/039455 A1). This system only required the working electrode to be exposed to the sensing solution, as the counter electrode used a reference solution to compensate the redox equation and close the circuit. Although this allowed to increase the sensitivity of the sensor, it further complicated the sensor configuration, not just in the fabrication of the nano- and microporous membranes, but also depended on a reference solution that should be contained in the sensor and the sensor became bulkier.

Therefore, there is still a need to increase the sensitivity of these systems without increasing their complexity and size. Furthermore, due to the redox reactions needed in order to obtain a current, either different electrodes must be used in the same solution, or different environments must be presented to each electrode when made of the same material. Finally, there is also a need to find better ways of detecting hydrogen peroxide in continuous flow mode without the interference of ascorbic acid and other redox-active species.

In the present invention, we present a different configuration of a hydrogen peroxide sensitive self-powered cell wherein the working (front) electrode and the counter (back) electrode are connected through an electrolytic conductor bridge, and the working electrode is porous so that it allows the aqueous solution to reach the electrolytic conductor bridge and eventually the counter electrode. Therefore, only the working electrode is exposed to the problem solution, achieving a full use of the exposed area as a current generation surface, increasing the sensitivity to hydrogen peroxide. Furthermore, as the counter electrode is only in contact with the solution through the electrolytic conductor bridge, the chemical environment of the counter electrode is different to the one of the working electrode, as the solution reaching the counter electrode carries ions that result from the working electrode redox reaction and H₂0₂ levels are negligible. Thus, it allows the use of front and back electrodes made from the same materials, such as platinum, while it doesn't require building different chemical environments by adding reference solutions. Moreover, the present invention does not need second enzymes such as Horseradish Peroxidase in order to be able to detect the peroxide, but it can directly detect its oxidation at a suitable reaction rate. A further benefit of this configuration is that it produces no interferences due to ascorbic acid in continuous flow measurements, making it even a better sensor in such conditions.

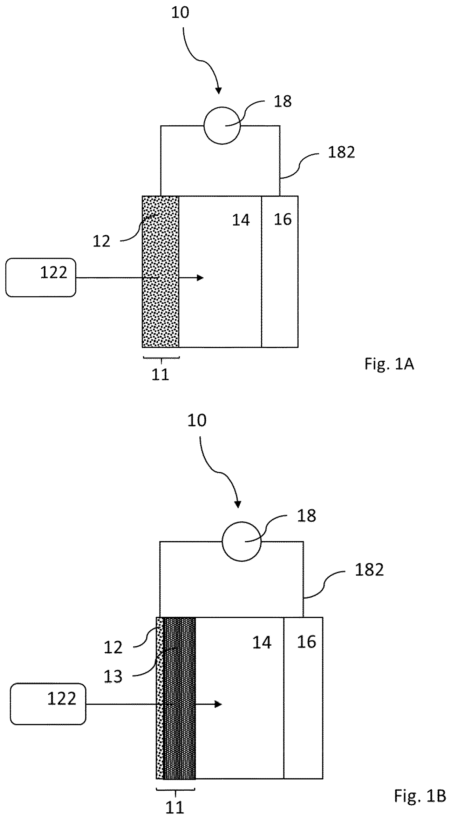

This configuration, wherein only the front electrode is directly exposed to the aqueous solution containing the target analyte, and wherein the front electrode is porous so that the aqueous solution can percolate through it and effectively reach the back electrode through a electrolytic conductor bridge; can be further extended to other amperometric and potentiometric cells for other purposes. Therefore, a powered amperometric sensor further comprising a voltage source between the working and the counter electrodes, a traditional amperometric sensor further comprising a reference electrode, and a potentiometric sensor (wherein the back electrode is the reference electrode) are possible with the aforementioned configuration. To the best of our knowledge, this is the first report for this kind of configuration for the detection of chemical species in solution, a schematic view of such configuration is provided in Figure 1A.

### FIGURES

**Figure 1****:** Electrochemical sensor schematic view. a) Without support b) With support in the front electrode.
**Figure 2****:** Current-based sensor schematic view. a) Self-powered. b) Externally powered.
**Figure 3****:** Potential-based sensor schematic view with support, coating and casing.
**Figure 4****:** Performance table of the sensor with each of the electrode materials under different configurations.
**Figure 5****:** Current-based self-powered single-electrode sensor for hydrogen peroxide detection configuration as used in the examples.
**Figure 6**: a) Response and b) calibration curve of the sensor in Figure 5 in solution mode.
**Figure 7**: a) Response and b) calibration curve of the sensor in Figure 5 in single volume mode.
**Figure 8****:** Current signal for different injected volumes of the sensor in Figure 5.
**Figure 9**: a) Response and b) calibration curve of the sensor in Figure 3 in continuous flow mode.
**Figure 10**: a) Time trace of glucose sensor in flow in self-powered mode (the numbers indicate the glucose concentration injected).
**Figure 11****:** Time trace of the sensor in Figure 5 in a continuous flow mode with 100µM of HzOz and 100µM of ascorbic acid.
**Figure 12**: a) Time-trace potential reading of a single electrode after the immunoreaction and the GOx-labelled antibody. The signals correspond to increasing additions of Glucose (0.1 and 1 mM) b) Time-trace current reading of a single electrode after the immunoreaction and the GOx-labelled antibody. The signals correspond to increasing additions of Glucose (0.1 and 1 mM).
Figure 13: A) Pixel of a digital camera (CCD) and B) the single electrode which acts as a chemically sensitive pixel (ChemPIX) with 1: Porous working electrode, 2: Polyelectrolyte layer, 3: base reference electrode.
Figure 14: A) Scheme of 3 separated single electrodes which act as a chemically sensitive pixel (ChemPIX). B) Scheme of 3 separated single electrodes where all the reference electrodes are connected to each other to form a unique reference electrode thus forming a multiplex electrode. C) Time-trace potential reading of 3 sensors in a solution (time 1500-1700) and where the reference electrode of sensor 1 and 3 are connected to each other (according to Figure 14B) and additions of H2O2 are performed (time 1700-2500, log scale -6 to -3.5).
**Figure 15****:** Time-trace potential reading of a multiplex electrode with 3 front electrodes with a first calibration upon addition of H₂O₂ (log scale -6 to-3.5, time 9500-13500), followed by recovery of the initial potential with successive washings steps with buffer solution and, then the sensors 1 and 3 were disconnected and the calibration was repeated to demonstrate that this is not affecting the potential reading of sensor 2. Eventually the sensors 1 and 3 were connected again at time 20500 and the reading of potential is comparable for the 3 sensors.
**Figure 16****:** Time trace and corresponding calibration curve for H₂O₂ of a multiplex electrode with 4 front electrodes in 5 µL drops of sample, i.e. for each front electrode a drop of 5 µL is introduced individually in a way that the front electrodes are not connected through the solution.
**Figure 17****:** Time trace of a multiplex electrode with 3 front electrodes in solution where two sensors are peroxide sensor and one is a glucose sensor (with previous functionalization with glucose oxidase). Additions of glucose do not display any response from H₂O₂ (time 1500-1650) whereas additions of H₂O₂ display potential response of the 3 sensors (additions at 1650 and 1850 of -5 and -4.5 of H₂O₂ respectively).

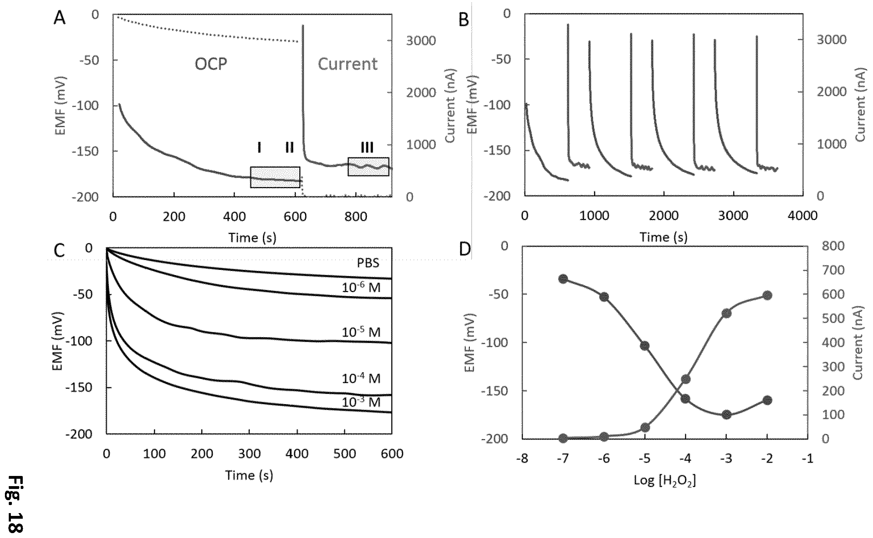

**Figure 18****:** OCP followed by self-powered measurement of the single electrode A) in PBS pH 7.4 (dashed line) and in PBS pH 7.4 with [H2O2] = 10⁻³ M with I means OCP mean value for calibration curve, II: the circuit is closed and the measure switch to current mode, III: current mean value for the calibration curve. B) Four successive cycles of OCP and self-powered measurement of the single electrode in PBS pH 7.4 with [H2O2] = 10⁻³ M. C) OCP response as a function of the concentration of [H2O2]. D) Corresponding calibration curve for OCP and current measurements (for faradaic current) at the cycle number 4.
**Figure 19****:** Potential amplification using a transistor: amplification in the source using commercial NPN MOSFET
**Figure 20****:** Amplification by incorporation of an operational amplifier (OA) where the electrode is connected to the inverted and non-inverted inputs of the OA, while an amplifying loop is used to increase the signal (a JFET LF 411 was used here).
**Figure 21****:** A and B) Time trace of sensors 2 and 3 and one amplified sensor 1 (according to figure 21). C) Corresponding calibration curve showing an increased sensitivity for the amplified sensor (a factor of 4 was detected here).

### DESCRIPTION

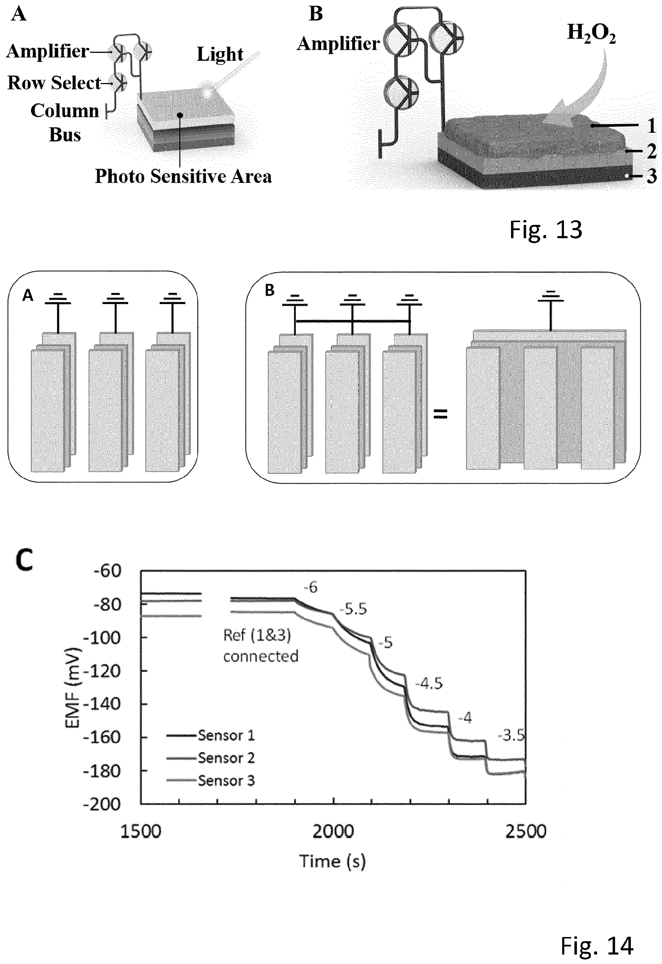

In a very simplified form, the detector of a digital camera (the CCD) can be considered an array of linked capacitors, the pixels, each one of them with the ability to transform light into charges that are collected and read. Each pixel is a capacitor where one of the plates is made with a photosensitive material, so when the light impacts the capacitor is charged, increasing its electrical potential (see figure 13). While the detailed functioning is more complex, the present detection system is based on an analogous principle, but -instead of light the "capacitors" of the present invention respond to a specific chemical stimulus. These "chemical pixels" (chempix) are designed so that a chemical species that interacts with one of the plates creates electrical charges that can be then read as an electrical signal. To achieve this, two things are necessary: 1) Charging mechanism: choose a suitable material that interacts selectively with the chemical species of interest through a reaction that generate charging events that change the electrode potential. 2) Design a suitable configuration that allows measuring this potential to be read.

In this invention, the first point is achieved through the use of a Pt (platinum) electrode. The affinity of Pt for peroxide is well demonstrated. Thus, Pt will be the material that will selectively interact with peroxide through a series of reactions that end up changing its charge state. The second point will be achieved by a smart redesign of the electrochemical cell, using a porous electrode in a, preferably vertically, stacked configuration. It is through this design that is possible to measure the changes on the electrochemical potential.

### a) Charging mechanism

When a metallic surface is exposed to an aqueous solution its electrical potential is adjusted to the surrounding environment. First, electrostatic interactions create a double layer capacitance: the metal/water interphase is highly polarized, producing an alignment of ions in layers. This is the electric double layer (EDL), a phenomenon that is common to metallic conductors and highly unspecific. Additionally, the gradient of chemical potential drives spontaneous background Faradaic reactions (see Figure 13: A) Pixel of a digital camera (CCD) and B) the chemically sensitive pixel (ChemPIX) with 1: Porous working electrode, 2: Polyelectrolyte layer, 3: base reference electrode Amplifier Row Select Column Bus Photo Sensitive Area Light 12 3 Amplifier H2O2 A B with solution components). Reduction reactions produce a cathodic exchange current (Ic) that scavenges electrons, while oxidation reactions produce and anodic exchange current (Ia) that supplies electrons. To avoid charge accumulation, the electrode assumes a steady state resting potential so that Ia and Ic are balanced (la + Ic = 0). The potential at which this situation occurs is known as the electrode mix potential, and is the result of a pseudocapacitive charging mechanisms that strongly depends on the nature of the anodic and cathodic reactions. This phenomenon of mix potential is widely used in corrosion studies but has received much less attention in chemical sensing. This is mostly because mix potentials are difficult to control and tend to produce erratic, non-selective responses. Thus, attempts to use mix potential in chemical sensing did not yield positive results. Nevertheless, we can modify the surface of the Pt electrode with a layer of a polyelectrolyte such as, but not limited to, Nafion (Pt-Nafion) to make the mix potential stable and highly selective to hydrogen peroxide. This is due to the mechanism of generation of mix potentials in Pt. When Pt is in contact with aqueous solutions the main cathodic process is the oxygen reduction reaction (ORR).

*O₂* + 4*H*⁺ + 4*e*⁻ → *2H₂O*

while the anodic process is produced by the metal and water oxidation.

*Pt* + *H₂O* → *PtO* + 2*H⁺* + 2*e⁻*

The result of this last reaction is that Pt electrode in contact with water have a partial surface oxide coverage. This is important because Pt and PtO have different reactivities. The bottom line of these processes is that when in contact with an aqueous solution, Pt electrodes get "charged" because of spontaneous reactions that occur on its surface, some of which scavenge electrons (ORR) and some that supply electrons (PtO). Removing electrons will create a more positive potential, while adding creates more negative potentials. In a steady state, the rate of removing electrons must be similar to the rate of adding them (la + Ic = 0). Since all electrochemical reactions have a potential dependent kinetics, the electrode potential is self-adjusted to a value that makes these two kinetic processes balanced. This is the mix potential of the Pt electrode. Evidently, since Pt gets charged by different reactions, anything that affect any of these reactions will have an effect on the charge state of platinum. Because of its chemical similarities with water and oxygen, peroxide produces a strong and very specific interference in the reactions that create these exchange currents. Because of its nature, peroxide can suffer oxidation, reduction, or dissociations. The reactivity between Pt and peroxide depends on the surface state of Pt. On pristine Pt sites peroxide is adsorbed, blocking the ORR. Since it blocks a process that removes electrons, the effect should be to lower (make more negative) the electrode potential. On PtO sites, on the other hand, the reactivity is different, since peroxide has the power to reduce the oxide

*PtO* + *H₂O₂* → *Pt* + *O₂* + *H₂O*

When reducing the PtO, peroxide injects electrons into the Pt, i.e., making the electrode more negative. Therefore, through different mechanisms, by addition of peroxide the Pt electrode potential gets more negative (electron accumulation) During the last years, using conventional electrochemical cells we have studied the determination of peroxide Pt-Nafion electrodes. In these systems, a response that is linear with the logarithm of the concentration of peroxide and a typical sensitivity of 120 mV/decade. This type of systems could be used to monitor glucose in whole, undiluted blood. Using a miniaturized electrochemical cell, we demonstrated that this approach can be used for developing simple potentiometric biosensors. One of the main advantages of this approach is that -unlike amperometric sensors- it does not require any redox mediators.

As a conclusion, the Pt-Nafion electrode can be conceived as a chemically sensitive surface with a charging mechanism controlled by the chemistry in solution, with charging events triggered by the presence of peroxide.
b) Configuration to measure the electrochemical potential.

Electrochemical potentials are generated at the interface between the electrode and the solution. Therefore, they must be measured through the interface. In a closed capacitor, for example, if the potential is generated on the external face, it cannot be measured as internal potential.

For this reason, attempts to create capacitors for chemical sensing have used cumbersome sample introduction approaches. In the biocapacitor or in biofuel cells for chemical sensing, the capillary flow on a paper placed in between the plates is used to drive the sample. Thus, the system is slow and hard to clean. The system proposed herein overcomes this issue by providing an external interface that is electrically connected with the internal electrolyte by using a porous electrode. With the pores filled with the same polyelectrolyte material, the electrode can be conceived as a mesh suspended in a continuous ionic conductor. Thus, the potential between plates can be measured because is monitored through the interface. In summary, the proposed configuration is a unique design: 1) The vertically stacked electrodes with the quasi solid state electrolytes allows a compact, pseudocapacitive configuration 2) The porous working electrode allows a semi-open cell, so that the sample does not need to be introduced through the plates 3) The Pt material coated with a polyelectrolyte such as Nafion provides selectivity for the detection of peroxide 4) A unique feature of this design is that is works with an internal reference electrode. Other electrochemical systems, such as amperometric cells, have an external reference. Similarly, chemical sensors using field effect transistors have as a major drawback the need for an external reference system. In this design, the internal reference is protected from external contamination.

### The Electrochemical Sensing array of the invention

As already stated, the present invention is based on a previous patented concept, namely on the use of "single electrodes". Namely, as used herein, the "single electrode" is an electrochemical sensor (10) comprising:
i. a front electrode (11) comprising pores permeable to the aqueous solution (122) and comprising a sensitive surface (12) to hydrogen peroxide;
ii. an electrolytic conductor bridge (14) permeable to the aqueous solution (122); and
iii. a back electrode (16) comprising at least a surface and optionally a support (13);

wherein the front electrode (11) and the back electrode (16) are electrically connected via the electrolytic conductor bridge (14); wherein the front electrode (11) comprises pores above 0.2 µm of equivalent diameter that connect the external surface of the front electrode (11) and the electrolytic conductor bridge (14);
wherein the sensitive surface (12) of the front porous electrode is a hydrogen peroxide sensitive surface (12) and is selected from any of the following list consisting of: copper, nickel, Prussian blue-coated materials, Prussian blue-coated composites, palladium, palladium nanomaterials and platinum or platinum derivatives such as black platinum and platinum nanomaterials;
wherein the electrochemical sensor (10) is configured so that the aqueous solution (122) enters in contact with the back electrode (16) through the electrolytic conductor bridge (14), which in turn enters in contact with the aqueous solution (122) through the pores of the front electrode (11);
wherein the electrochemical sensor (10) further comprises means (18) for determining the difference in the electrochemical state between the front electrode (11) and the back electrode (16); and wherein the determination of such difference in the electrochemical state indicates the hydrogen peroxide presence and/or concentration in the aqueous solution (122).

In the, preferably vertically, stack cell of the single electrode, as defined above, the presence of peroxide produces accumulation of charges on the upper or front electrode, and this is registered as an increment on the potential of the cell. This means that this cell can be conceived as a pixel sensitive to a chemical stimulus. The signal can be read in potential and current mode (exactly like conventional pixels). The back plate (reference) can be grounded. Thus, two pixels operating simultaneously may have both the reference electrodes grounded. That means that the two references can be connected, as far as the pixel reading is independent. This is equivalent to say that there might be a single back electrode and polyelectrolyte layer common to all the sensors, and then individual sensing units or front electrodes. That is, as used in the present invention, a multiplex electrode is made of two or more single electrodes where two or more of the front electrodes are operationally associated, wherein operationally associated is understood as two or more front electrodes being electrically interconnected via an electrolytic conductor bridge to the same back electrode for determining a difference in the electrochemical state. Clearly, in this design the back does not need to be grounded, but it can be fixed at any common potential.

In this approach the reference level is common to all the electrodes. The operationally associated front electrodes can be multiplied to have similar readings for the same substance (so having statistical advantage of reducing the uncertainty). They can be also modified to have different performance for the same substance (e.g., linear ranges). And can be also functionalized for different substances. The multiplex electrode can be read in potential and current mode, independently. This provides the additional advantages of creating multiple time-based readings for the same pixel. This allows tuning performance for high sensitivity or high linear range.

For the present invention, we have performed different experiments to demonstrate the above concept, namely the electrochemical sensing array of the invention.

First, as indicated in figure 14, we have used separated "single electrodes" (not connected) and connected "single electrodes" having only one back electrode or reference channel. Part A) of figure 14 describes three unconnected single electrodes in the same cell (each channel connected separately) (in this figure, each sensor achieves a comparable detection (sensitivity)). Part B) of figure 14 describes three similar single electrodes but, in this specific case, all of these single electrodes are connected to one single reference or back electrode. From the data provided in figure 14, it can be concluded that a single back electrode, and a single electrolytic conductor bridge, can be used for multiple working electrodes, i.e. concept of multiplexing.

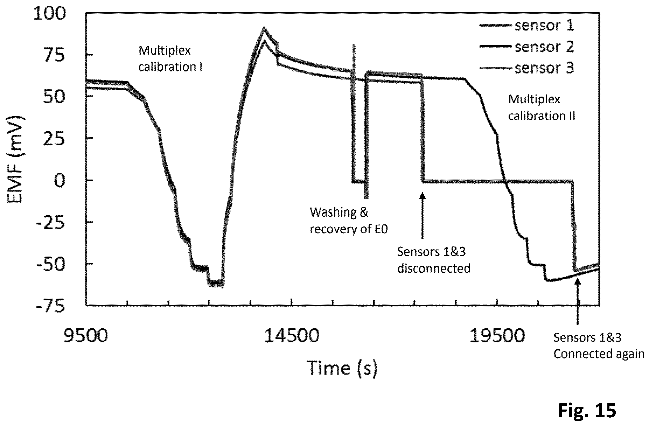

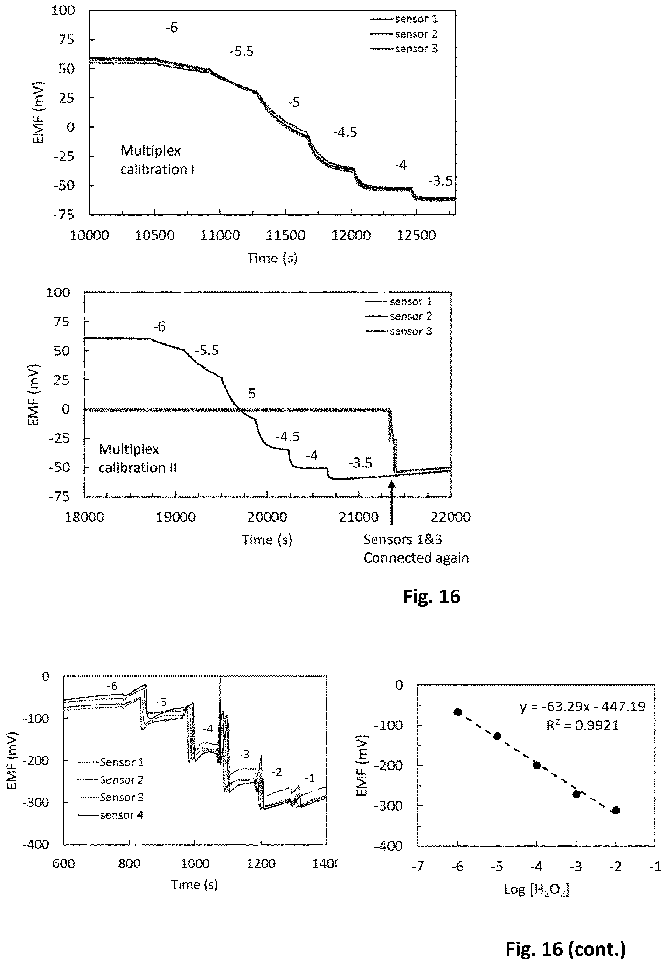

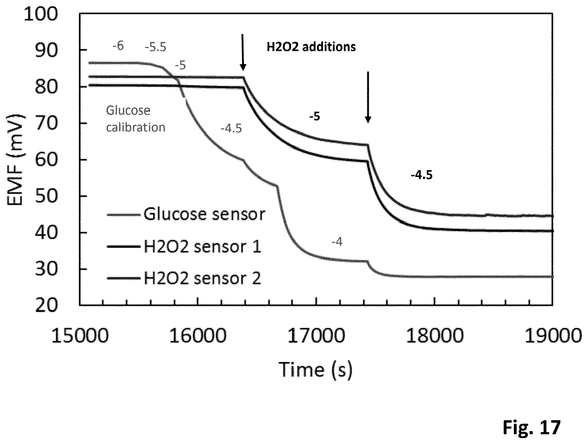

On the other hand, figure 15 shows that each of the operationally associated front electrodes identified therein provide for comparable potentiometric responses and, importantly, the electrochemical response of each of these operationally associated front electrodes is not affected by the other working electrodes of the array. A similar conclusion can be drawn from figures 16 and 17. In addition, figure 18 demonstrates that the signal provided by the "single electrodes" of the invention can be read in potential and current mode (exactly like conventional pixels).

From figures 13 to 18, it can be thus concluded that:
a. A single electrodes as described herein can be effectively multiplexed by sharing a common back electrode and preferably a common electrolytic conductor bridge such as a nafion membrane. Such multiplexing provides for two or more single electrodes where two or more of the front electrodes are operationally associated, wherein operationally associated is understood as two or more front electrodes being electrically interconnected via an electrolytic conductor bridge to the same back electrode for determining a difference in the electrochemical state.
b. Each unit of detection or sensing unit of the operationally associated front electrodes of the multiplex electrode behaves like a "chempixel" with an independent response.
c. H2O2 (peroxide) is quickly consumed at each working electrode or front electrode surface which minimizes any working to working electrode crosstalk facilitating an independent measurement for each of the working electrodes or sensing units of the multiplex electrode.
d. Each unit of detection or sensing unit of the operationally associated front electrodes of the multiplex electrode can be operated in current and/or potential mode (in amperometric and potentiometric systems).

In the present invention, thus each unit of detection or sensing unit of the operationally associated front electrodes of the multiplex electrode acts as capacitively generated signals. Thus, capacitively coupled amplifying systems should allow amplification in the source. In addition, said signal can be modulated by coupling additional electronic components, such as transistors. Examples commonly used in practice (but not limited to) are addition of JFETs or MOSFETs to amplify the signal. However, for those with an expertise on the field, it is clear that any other signal modulation circuit (such as charge pumps, etc.) could be also added for reading potentials.

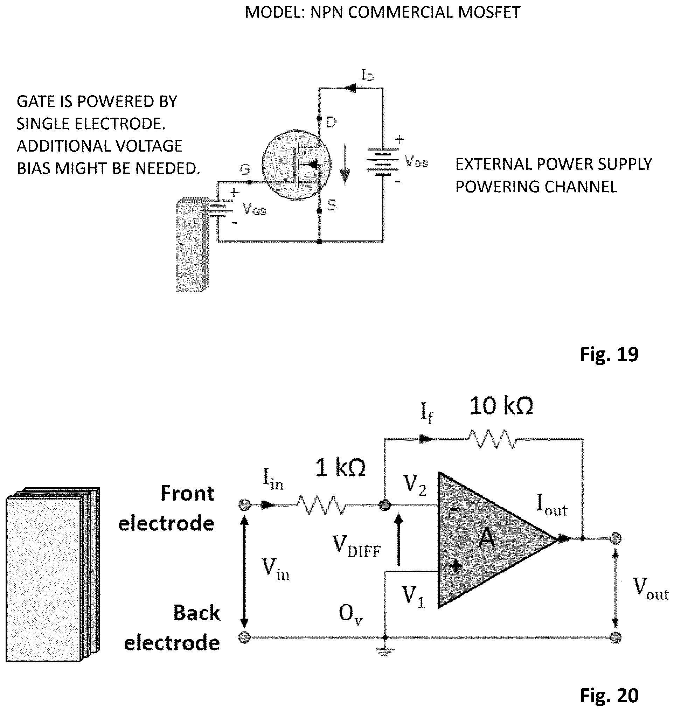

The use of JFETs or MOSFETs are exemplified herein in figures 19 and 20 . Proofs of principle were performed with the conventional, commercial enhancement mode MOSFET: B7434 Drain was biased to +5V (USB), source was grounded. Transistor was used in a common-source configuration, connecting the single electrode to the gate. Since the transistor has a threshold value, an additional bias was applied to work on the saturation region.

Therefore, we can further conclude that the signal of each unit of detection or sensing unit of the operationally associated front electrodes of the multiplex electrode can be effectively amplified by adding conventional amplification strategies. Simple MOSFET amplifiers can enhance the signal and more elaborated signal manipulation is also possible by adding operational amplifiers.

Consequently, a first aspect of the invention refers to an electrochemical sensor or cell suitable for determining the presence and/or the concentration of one or more target analytes in one or more aqueous solutions, which comprises:
- At least two or more front electrodes comprising pores permeable to the aqueous solution and comprising a sensitive surface to the target analyte;
- One or more electrolytic conductor bridges permeable to the aqueous solution; and
- one or more back electrodes comprising at least a surface, preferably a sensitive surface, and optionally a support;
wherein the at least two or more front electrodes are electrically connected via the one or more electrolytic conductor bridges to the one or more back electrodes; wherein each of the front electrodes comprise pores above 0.2 µm of equivalent diameter, that connect the external surface of the front electrode and the one or more electrolytic conductor bridges; wherein the electrochemical sensor is configured so that the aqueous solution enters in contact with the one or more back electrodes through the electrolytic conductor bridge, which in turn enters in contact with the aqueous solution through the pores of the front electrode; wherein the electrochemical sensor further comprises means for determining the difference in the electrochemical state between the front electrode and the back electrode; and wherein the determination of such difference in the electrochemical state indicates the target analyte presence and/or concentration in the aqueous solution.

It is preferably noted that the at least two or more front electrodes are electrically connected via the one or more electrolytic conductor bridges to a single (or shared) back electrode. More preferably, the at least two or more front electrodes are electrically connected via an electrolytic conductor bridge to a single back electrode. More preferably, the present invention provides for a multiplex electrode which comprises:
- At least two or more front electrodes as defined above;
- One or more electrolytic conductor bridges as defined above; and
- one or more back electrodes as defined above, and optionally a support;
wherein two or more of the front electrodes are operationally associated, wherein operationally associated is understood as two or more front electrodes being electrically interconnected via an electrolytic conductor bridge to the same back electrode for determining a difference in the electrochemical state.

The use of a macroporous electrode as the front electrode, provides surprising effects to the sensibility of the sensor to the target analyte as shown in Example 2. This is the result of a combination of consequences of the macropores. Firstly, as the aqueous solution percolates through the pores, the back electrode can be hidden from the aqueous solution maximizing the working electrode proportion of the exposed area. Secondly, in single volume and continuous flow analysis the percolation of the aqueous solution breaks the surface tension of the aqueous solution and the formation of large drops is avoided. This improves the contact with the electrode facilitating chemical interactions. Also, a diffusion of atmospheric oxygen is promoted, which may be beneficial for some chemical systems. In contrast with previously disclosed nanoporous electrodes, the present macroporous electrode allows full percolation of the aqueous solution through its surface and reach the electrolytic conductor bridge. Therefore, its function it's not related with the functionalization of the surface with redox mediators and/or electrocatalysts but with the permeability of such electrode to the aqueous solution containing the target analyte.

Although the front electrodes and the one or more back electrodes of the multiplex electrode of the present invention are electrically connected via one or more electrolytic conductor bridges; this can be done in several configurations (vertically, laterally, in a non-linear way). It will be appreciated than any suitable configuration may be used as long as the front electrodes and the one or more back electrodes are connected via the one or more electrolytic conductor bridges. In a similar way, the shape and size of the front electrodes and the one or more back electrodes may differ in several ways as long as the two electrodes are connected via the one or more electrolytic conductor bridges. The electrolytic conductor bridge has a double function: it allows to close the electrical circuit between the electrodes and it further serves as the medium where the positive and negative charges of the electrodes are balanced.

It must be noted that the aqueous solution reaches the one or more back electrodes and the one or more electrolytic conductor bridges only by percolating through the macropores of the front electrodes. Therefore, the one or more back electrodes exposure to the aqueous solution is only indirect, in the sense that the aqueous solution containing the target analyte as presented to the electrodes preferably won't reach the electrode, but an altered version of the aqueous solution will, as the reaching solution has necessary percolated through the front electrodes and has already undergone through a redox reaction. In the case of the use of polyelectrolytes such as ionomers, it is well known that they present a permselective behaviour, i.e., act as barrier for negatively charged species. Also, they provide an enhanced proton conductivity and high solubility for oxygen, which may enhance some chemical reactions.

It must be noted that when the one or more back-electrodes surface is contacted by the aqueous solution it produces changes in the surface-aqueous solution interface that affect the electrochemical state of the electrode/s. Although the one or more back electrodes are not directly exposed to the aqueous sample, they require a suitable environment to generate the electrochemical interface so that the pertaining redox or reference reactions can take place and the sensor work as such. Therefore, the aqueous solution must always, although indirectly, reach the one or more back electrodes through the front electrodes' pores and the one or more electrolytic conductor bridges nanopores to create a sensor using this configuration. This can be achieved, for example, at the beginning of the measurements by adding a small volume of electrolyte solution (e.g. a buffer solution) to the front electrodes and allow for the stabilization. When the one or more back electrodes are dry, current flowing in the system would be extremely low (< 1 nA), but when a drop of background electrolyte solution (just buffer, no analyte) is added, the current increases and stabilizes. If the sensor dries up, the current drops again, and can be recovered in the same way as before. In the case of potential, if the sensor is dry the difference of potential (front-back) is very noisy and erratic. Once the sensor is wet, the noise is reduced and the potential stabilizes, usually around 20 mV. This is also evident from measuring the electrical conductivity between the front electrodes and the one or more back electrodes. When the sensor is dry, the conductivity is very low (high resistance). As the background solution is added, conductivity increases (liquid is necessary to allow for the chemical reactions and also for charge mobility in the ion bridge).

It must be also noted that the sensor can be also built as a system with two or more front electrodes, a conductor bridge (as described above) one or more reference electrodes and one or more counter electrodes. In this case, the two or more front electrodes are exposed before the one or more bridges to the aqueous solution, and the one or more reference and counter electrodes are shielded behind the electrolytic conductor bridge. There are several configurations to arrange these electrodes. For example, the back or reference electrodes and counter electrodes could be stacked (one before the other one), in parallel, inserted in the electrolytic conductor bridge or behind it in the same plane or different planes. Other configurations not described herein are possible in this configuration when these three different electrodes are used.

Fig. 1A shows a schematic diagram of a electrochemical sensor 10 with a front electrode 11 comprising a porous sensitive surface 12, an electrolytic conductor bridge 14, a back electrode 16 and a means 18 for determining the difference in the electrochemical state between the front electrode 11 and the back electrode 16. The front electrode 12 is porous and allows an aqueous solution 122 to percolate through it and access the electrolytic conductor bridge 14. The means 18 is connected to the front electrode 11 and the back electrode 16 through a low resistance wire 182 that connects it with each electrode 11 and 16 so that it can determine the difference in their electrochemical state. The front electrode 11 and the back electrode 16 are connected through the electrolytic conductor bridge 14, which allows the solution 122 to indirectly reach the back electrode 16 from the macroporous front electrode 11. It must be noted that several means can achieve such effect, such as an ammeter or a voltmeter, as long as the difference in the electrochemical state between the front electrode and the back electrode can be determined. It must be also noted that additional electrical or electronic means can be added in the electric circuit to facilitate the measurements in any of the embodiments described herein.

In a preferred embodiment of the first aspect of the invention or of any of its preferred embodiments, the two or more front electrodes comprise a pore density configured to provide a Herzberg flow rate lower than 2500 s/100 mL.

In another preferred embodiment of the first aspect of the invention or of any of its preferred embodiments, the two or more front electrodes comprise pores preferably between 0.2 µm and 50 µm, more preferably between 1 µm and 25 µm, and even more preferably between 1.5 µm and 10 µm of equivalent diameter.

Electrochemical sensors can be classified by the type of means used to determine the difference in the electrochemical state between the two or more front electrodes and the one or more back electrodes; as different properties of the chemical reactions occurring at the electrodes can be exploited to determine the target analyte presence and/or concentration in the aqueous solution. Two common means used to determine the difference in the electrochemical state between two electrodes are ammeters, which measure the current flowing between the electrodes; and voltmeters, which measure the voltage between the electrodes. However other means as known in the art can be also used to measure current and potential between electrodes. Each means supposes different fields of electrochemical sensors with particular characteristics as observed below.

In a further preferred embodiment of the first aspect of the invention or of any of its preferred embodiments (from hereinafter referred as the "current-based embodiment"), the electrochemical sensor is a current-based sensor wherein the two or more front electrodes are working electrodes and the one or more back electrodes are counter electrodes; wherein the counter electrode/s carries out a complementary Faradaic reaction to the reaction carried out in the working electrodes; and wherein the means for determining the difference in the electrochemical state is connected between the two or more front electrodes and the one or more back electrodes and configured to measure a current flowing between the front electrodes and the one or more back electrodes. Such means might be an ammeter, a resistor, capacitor or any other electric or electronic means as well as combinations thereof. It is noted that the means for determining the difference in the electrochemical state can be connected so that each front electrode or group of front electrodes are connected separately from other front electrodes or groups of front electrodes present in the sensor to the one or more back electrodes, so that the sensor is configured to measure different currents flowing between each of the front electrodes or group of front electrodes and the one or more back electrodes.

The current-based sensor relies on the Faradaic (redox) reactions spontaneously occurring on the anode and cathode which makes electrons liberated into the anode reach the cathode through the ammeter, where the electrons are released into the back electrode medium balancing the redox equation from the anode.

In a preferred embodiment of the current-based embodiment, the current-based sensor employs the energy generated at the interface of the two or more front electrodes when in contact with the aqueous solution to power the sensor. Therefore in this embodiment, the sensor works as what its known as a self-powered sensor, where "self-powered" refers to the fact that the sensor does not require the input of an external voltage to favour the redox reactions in the electrodes, but it is the energy generated at the interface of each of the front electrodes the one that provides such voltage.

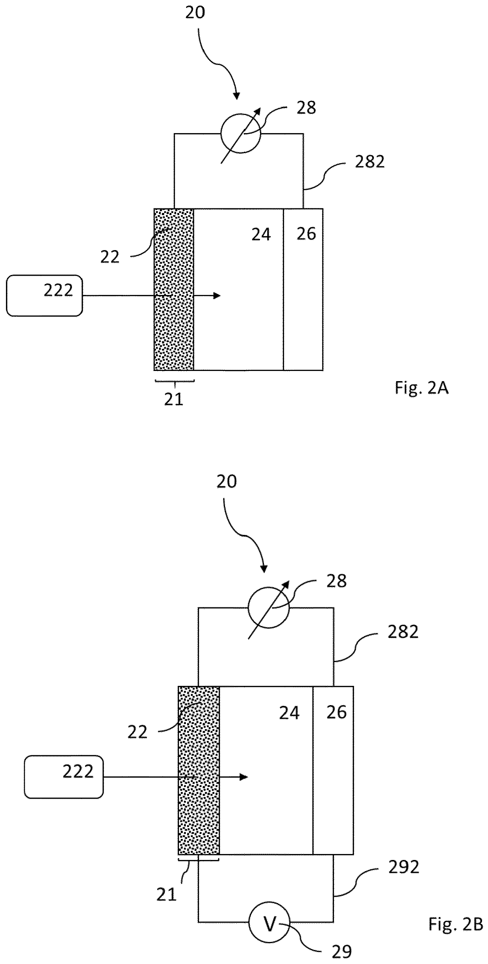

Fig. 2A shows a schematic diagram of a self-powered current-based sensor 20 with a front electrode 21 comprising a porous sensitive surface 22, an electrolytic conductor bridge 24, a back electrode 26 and an ammeter 28 for determining the current flowing between the front electrode 21 and the back electrode 26. The front electrode 21 is porous and allows a fluid solution 222 to percolate through it and access the electrolytic conductor bridge 24. The ammeter 28 is connected to the front electrode 21 and the back electrode 26 through a low resistance wire 282 that connects it with each electrode 21 and 26 so that it can determine the current flowing between the electrodes 21 and 26 to flow. The circuit is closed through the electrolytic conductor bridge 24, which allows the current flow between the front electrode 22 and the back electrode 26 and the solution 222 to reach the back electrode 26 from the macroporous front electrode 21.

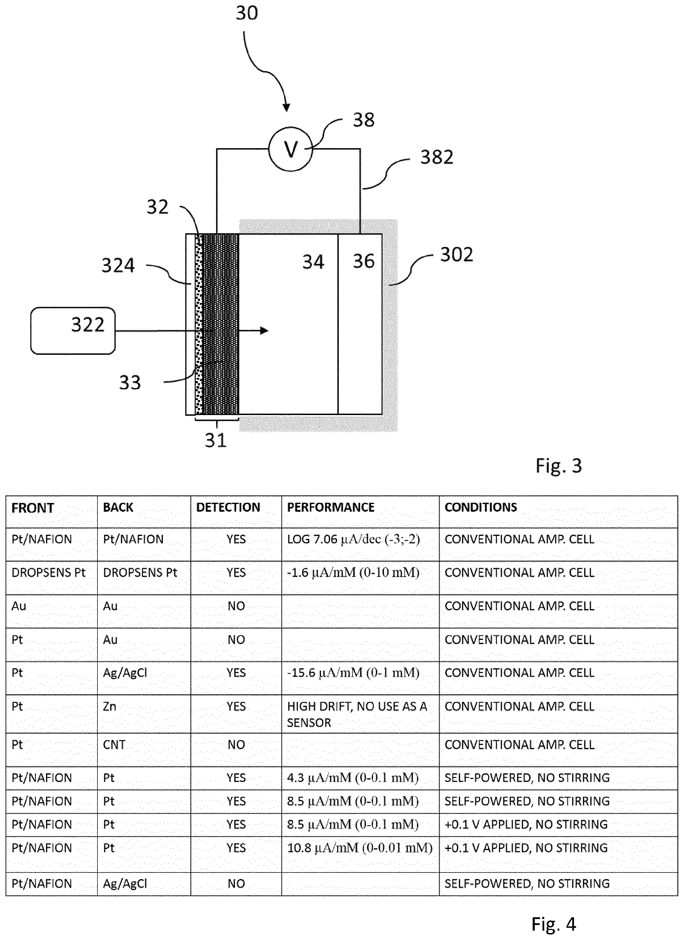

In an alternative preferred embodiment of the current-based embodiment, the current-based sensor further comprises one or more voltage sources connected between each of the front electrodes or groups of front electrodes and the one or more back electrodes configured to apply a potential between the electrodes. Applying a potential that favours reactions at the electrodes (added to the one created by the (bio)chemical reactions) allows to further control the performance of the cell as shown in Fig. 4.

Fig. 2B shows a schematic diagram of a current-based sensor 20 with a porous front electrode 21 comprising a porous sensitive surface 22, an electrolytic conductor bridge 24, a back electrode 26 and an ammeter 28. The front electrode 21 is porous and allows a fluid solution 222 to percolate through it and access the electrolytic conductor bridge 24. The single-electrode 20 further comprises a voltage source 29 connected to the front electrode 21 and the back electrode 26 through a wire 292. The voltage source 29 favours reactions at the electrodes (the potential is added to the one from the biochemical reactions) and allows to control the performance of the cell. The voltage source 29 may comprise a mains power source, one or more batteries, a constant voltage or constant current power source or the like.

In another preferred embodiment of the current-based embodiment or of any of its preferred embodiments (from hereinafter referred as "hydrogen peroxide sensitive current-based embodiment"), the sensitive surface of the two or more front porous electrodes is a hydrogen peroxide sensitive surface and is selected from any of the following list consisting of: copper, nickel, Prussian blue-coated materials, Prussian blue-coated composites, palladium, palladium nanomaterials and platinum or platinum derivatives such as black platinum and platinum nanomaterials; so that the current-based sensor is configured to selectively measure hydrogen peroxide as the target analyte.

It is of special significance the importance of the front (anode) and back (cathode) electrodes materials of the hydrogen peroxide sensitive current-based sensor. Traditional amperometry relies on materials such as gold and carbon materials, which in this hydrogen peroxide sensitive current-based sensor system are not suitable as they don't catalyse the direct, spontaneous electron transfer reaction with peroxide. The working electrodes seem to be strictly limited to hydrogen peroxide redox sensitive materials, while the one or more counter electrodes are less restrictive, as conducting polymers can also be used. It must be also noticed that, due to its particular design, there is the possibility of using front and counter electrodes made of the same material without the need for different solutions, as the bridge and the porous front electrode ensure the environment of the hydrogen peroxide sensitive surface of the front electrode and the back electrode are different, allowing for the redox reaction to occur in a closed circuit. In such case, because of the different chemical interfaces, one of the electrodes acts as anode, and the other as cathode.

Such configuration is counter-intuitive in traditional amperometry as known in the art, as redox reactions need an electron donor (anode-oxidation) and an electron receiver (cathode-reduction) and for the same solution, a material will always be prone to either one of the two reactions under a certain potential, but having opposite reactions defies what traditional amperometry have always expected. The explanation for this previously unforeseen reaction relies on the different medium the back (not directly exposed) electrode is exposed to, when the sensing solution (the aqueous solution with the analyte to be measured) only enters into contact with the back electrode through the electrolytic conductor bridge, which captures the solution that percolates through the front (working) macroporous electrode. Specifically, the front electrode is exposed to a solution with hydrogen peroxide that its oxidized, and under certain concentration level, no hydrogen peroxide is able to reach the back electrode as it's quickly decomposed in each of the front electrodes surface. Therefore, the percolated solution is different to the solution each of the front electrodes are exposed to, allowing for an ORR (Oxygen Reduction Reaction) to spontaneously occur at the back electrode. However, this different configuration has been shown not to be compatible with some of the traditional materials for electrodes, such as Gold, and Carbon materials. Therefore, the selection of electrode materials is not a trivial decision. As a general rule, if peroxide produces electrochemical reactions with the electrode surface, it could be used as a working electrode, but the optimization of this system must be empirically found through a suitable combination of the back electrode.

It must be noted that any hydrogen peroxide sensitive surface of each of the front electrodes, can be used to further detect by-products of reactions catalysed by oxidase enzymes, therefore detecting target analytes. Therefore, any of these embodiments must be also understood as applicable in such cases.

In a preferred embodiment of the hydrogen peroxide sensitive current-based embodiment, the one or more electrolytic conductor bridges connecting the electrodes of the hydrogen peroxide sensitive current-based sensor is selected from any of the following list consisting of: a polyelectrolyte, a solid polymer electrolyte, an ionogel and a ionomer such as tetrafluoroethylene-perfluoro-3,6-dioxa-4-methyl-7-octenesulfonic acid copolymer. It must be noted that in the current-based sensor, the one or more electrolytic conductor bridges perform a very important function, as the positive charge at the working electrodes must be balanced with the negative charge at the counter electrode. The electrolytic conductor bridges provide the medium for the balancing to happen and provides an aqueous medium to the back electrode.

In another preferred embodiment of the hydrogen peroxide sensitive current-based embodiment or of any of its preferred embodiments, the one or more back electrodes of the hydrogen peroxide sensitive current-based sensor comprises a conductive material selected from any of the following list consisting of: zinc, silver/silver chloride, conducting polymers such as PEDOT-PSS and platinum or platinum derivatives such as platinum-coated carbon materials and platinum nanomaterials, preferably platinum. It is important to note that suitable back electrodes are made with those materials that can efficiently produce the ORR (or an alternative reduction with solution components).

It is noted that any combination of the front electrodes, the one or more electrolytic conductor bridges and the one or more back electrodes lists is suitable and therefore can work in the current-based sensor. It must be further noted that the selection of the electrode depends on its ability to produce the complementary redox reactions and the working potential. Therefore, some combinations, although possible, are not the best choice for certain analytes. For example, Zn was tested as a back electrode with Pt as front electrode. However, the large difference of potential between both and the high efficiency of Zn for the ORR, creates a very large baseline current, which makes the detection not ideal, as shown in Example 1. The difference of potential is also important because of the nature of the reactions involved. Depending on the back electrode chosen, the front electrode might be forced to act as a cathode.

In another preferred embodiment of the hydrogen peroxide sensitive current-based embodiment or of any of its preferred embodiments, the hydrogen peroxide sensitive surface of each of the front electrodes and the one or more back electrodes of the hydrogen peroxide sensitive current-based sensor comprise or are made of platinum.

In a further preferred embodiment of the hydrogen peroxide sensitive current-based embodiment or of any of its preferred embodiments, the hydrogen peroxide sensitive surface of the front electrodes and the one or more back electrodes of the hydrogen peroxide sensitive current-based sensor comprise or are made of platinum and the one or more electrolytic conductor bridges are made or composed of tetrafluoroethylene-perfluoro-3,6-dioxa-4-methyl-7-octenesulfonic acid copolymer.

It is noted that the use of a tetrafluoroethylene-perfluoro-3,6-dioxa-4-methyl-7-octenesulfonic acid copolymer is used to favour chemical reactions. It's use as the electrolytic conductor bridge allows: the water and ions transport through nanopores, creates high local acidity (due to protons in sulfonate groups) and high concentration of O₂ due to its higher solubility in this acid copolymer. Therefore, the use of a tetrafluoroethylene-perfluoro-3,6-dioxa-4-methyl-7-octenesulfonic acid copolymer as the electrolytic conductor bridge favours conditions for the ORR.

In an alternative further preferred embodiment of the first aspect of the invention or of any of its preferred embodiments (from hereinafter referred as "potential-based embodiment"), the electrochemical sensor is a potential-based sensor; wherein each of the two or more front electrodes are the working electrodes and the one or more back electrodes are the reference electrode/s; wherein the reference electrode provides a stable potential; and wherein the means for determining the difference in the electrochemical state is connected between the front electrode and the back electrode and configured to measure the difference in voltage between the front electrode and the back electrode. Such means might be a voltmeter or any other electric or electronic means as well as combinations thereof. In a preferred embodiment of the potential-based embodiment (from hereinafter referred as "hydrogen peroxide sensitive potential-based sensor"), the sensitive surface of the two or more front porous electrodes of the potential-based sensor is a hydrogen peroxide sensitive surface and its sensitive surface is selected from any of the following list consisting of: platinum, Prussian blue, zinc, copper and gold, preferably platinum; so that the potential-based sensor is configured to selectively measure hydrogen peroxide as the target analyte.

In a preferred embodiment of the hydrogen peroxide sensitive potential-based embodiment or of any of its preferred embodiments, the one or more electrolytic conductor bridges connecting the electrodes of the hydrogen peroxide sensitive potential-based sensor is selected from any of the following list consisting of: a polyelectrolyte, a solid polymer electrolyte, an ionogel and a ionomer such as tetrafluoroethylene-perfluoro-3,6-dioxa-4-methyl-7-octenesulfonic acid copolymer.

In another preferred embodiment of the hydrogen peroxide sensitive potential-based embodiment or of any of its preferred embodiments, the one or more reference electrodes of the hydrogen peroxide sensitive potential-based sensor comprises a conductive material selected from any of the following list consisting of: silver, platinum, gold, nickel, zinc, copper, silver/silver chloride, conducting polymers such as PEDOT-PSS, aluminium and carbon.

It is noted that any combination of the front electrodes, electrolytic conductor bridges and back electrodes material lists is suitable and therefore can work in the potential-based sensor. It must be further noted that the selection of the electrode depends on its ability to produce the complementary redox reactions and the working potential. Therefore, some combinations, although possible, are not the best choice.

In another preferred embodiment of the hydrogen peroxide sensitive potential-based embodiment or of any of its preferred embodiments, the hydrogen peroxide sensitive surface of each of the front electrodes and of the one or more reference electrodes of the hydrogen peroxide sensitive potential-based sensor comprise or are made of gold or platinum.

In another preferred embodiment the hydrogen peroxide sensitive potential-based embodiment or of any of its preferred embodiments, the hydrogen peroxide sensitive surface of the front electrode and the reference electrode of the hydrogen peroxide sensitive potential-based sensor comprise or are made of gold or platinum and the electrolytic conductor bridge is made or composed of tetrafluoroethylene-perfluoro-3,6-dioxa-4-methyl-7-octenesulfonic acid copolymer.

As in the current-based sensor, the use of a tetrafluoroethylene-perfluoro-3,6-dioxa-4-methyl-7-octenesulfonic acid copolymer is used to favour chemical reactions. It's use as the electrolytic conductor bridge allows: the water and ions transport through nanopores, creates high local acidity (due to protons in sulfonate groups) and high concentration of O₂ due to its higher solubility in this acid copolymer. Therefore, the use of a tetrafluoroethylene-perfluoro-3,6-dioxa-4-methyl-7-octenesulfonic acid copolymer as the electrolytic conductor bridge favours conditions for the ORR.

In another preferred embodiment of the first aspect of the invention or of any of its preferred embodiments, the multiplex electrode of the invention further comprises a support which in turn comprises a conductive material. It is noted that such support may be formed by plastic, paper, rubber, textile, composites, and combinations of any material, as long as it serves as a supporting element for the electrodes can be used to practice the present invention. In the case of the front electrodes, due to its macro-porosity requirements, the support material must ensure the properties arisen from this macro-porosity are not limited, for example the support material must still be porous to the extent that the aqueous solution can still percolate through it. In a similar way, the support shouldn't impede the process of the chemical reactions occurring at the electrodes, but it could serve as a catalyser of such; and electrical conductivity must not be affected by these supports. For example, the ionomer tetrafluoroethylene-perfluoro-3,6-dioxa-4-methyl-7-octenesulfonic acid copolymer enhances the oxygen reduction reaction in platinum, so a support could be formed by soaking a paper with this ionomer.

Fig. 1B shows a schematic diagram of a electrochemical sensor 10 with a front electrode 11 comprising a porous sensitive surface 12 and a support 13, an electrolytic conductor bridge 14, a back electrode 16 and a means 18 for determining the difference in the electrochemical state between the front electrode and the back electrode. The support 13 allows the aqueous solution 122 to percolate through it and does not hinder the electrochemical reactions occurring at the porous sensitive surface. It must be noted, that, although not explicitly shown in this diagram, the back electrode could also have a support, and that the opposite configuration where only the back electrode has a support is also possible.

In another preferred embodiment of the first aspect of the invention or of any of its preferred embodiments, the front porous electrodes, the one or more electrolytic conductor bridges and the one or more back electrodes of the electrochemical sensor are configured so that these are stacked, and preferably they are vertically stacked.

In another preferred embodiment of the first aspect of the invention or of any of its preferred embodiments, the front porous electrodes, the one or more electrolytic conductor bridges and the one or more back electrodes of the multiplex electrode are configured so that these are stacked, and preferably they are vertically stacked and more preferably the front electrodes are directly above the one or more back electrodes.

It is noted that the front porous electrodes, the one or more electrolytic conductor bridges and the one or more back electrodes can be stacked in several configurations (vertically, laterally, in a non-linear way). It must be further noticed that the front electrodes may be directly above the one or more back electrodes or vice versa, so that the gravity and/or capillarity can be used to facilitate the percolation of the aqueous solution. It will be appreciated than any suitable configuration may be used as long as the aqueous solution can reach the one or more back electrodes when contacted with the front porous electrodes, and that gravity is not a limiting factor as the capillarity of the electrodes and/or the conductor bridge and the flow velocity of the aqueous solution can achieve this without the need of gravity.

In another preferred embodiment of the first aspect of the invention or of any of its preferred embodiments, the electrochemical sensor or multiplex electrode is covered so that when immersed, only the front electrodes are exposed to the one or more aqueous solutions to be tested. It is noted that several materials and strategies can be used to adapt the electrochemical sensor so that only the front electrodes are directly reachable by the one or more aqueous solutions. Materials like rubber, plastic, metal and other impermeable materials can be used to create a casing that protects all the electrochemical sensor from the exterior, and one or more small apertures on the casing would provide access to the front electrodes or group of electrodes. Therefore, when the electrochemical sensor is contacted with the one or more aqueous solutions, only the front electrodes would be directly reached by these aqueous solutions, although the one or more back electrodes would be indirectly reached by the aqueous solutions previously percolated through the porous front electrodes and the one or more electrolytic conductor bridges.

In another preferred embodiment of the first aspect of the invention or of any of its preferred embodiments, the one or more electrolytic conductor bridges connecting the electrodes of the electrochemical sensor or multiplex electrode are selected from any of the following list consisting of: a polyelectrolyte, a solid polymer electrolyte, an ionogel and a ionomer such as tetrafluoroethylene-perfluoro-3,6-dioxa-4-methyl-7-octenesulfonic acid copolymer. It is noted that the one or more electrolytic conductor bridges can be made from other materials that can be an ionically connective media that provide ionic electrical conductivity and water permeability.

In another preferred embodiment of the first aspect of the invention or of any of its preferred embodiments, the front electrodes of the electrochemical sensor are coated with tetrafluoroethylene-perfluoro-3,6-dioxa-4-methyl-7-octenesulfonic acid copolymer. It is noted that in the case of the current-based sensor, the use of coatings (such as tetrafluoroethylene-perfluoro-3,6-dioxa-4-methyl-7-octenesulfonic acid copolymer) may reduce the sensitivity. However, the role of tetrafluoroethylene-perfluoro-3,6-dioxa-4-methyl-7-octenesulfonic acid copolymer is also to contain and limit the flow of electrolyte due to capillarity of the support. Therefore, tetrafluoroethylene-perfluoro-3,6-dioxa-4-methyl-7-octenesulfonic acid copolymer is useful to control the baseline and stability of the response.

Fig 3 shows a schematic diagram of a potential-based sensor 30 with a front electrode 31 comprising a porous sensitive surface 32 coated with coating 324, an electrolytic conductor bridge 34, a back electrode 36 and a voltmeter 38 for determining the potential between the front electrode 31 and the back electrode 36. The front electrode 31 is porous and allows a fluid solution 322 to percolate through it and access the electrolytic conductor bridge 34. The voltmeter 38 is connected to the front electrode 31 and the back electrode 36 through a low resistance wire 382 that connects it with each electrode 31 and 36 so that it can determine the potential between the electrodes 31 and 36 to flow.

The coating 324 may reduce the sensitivity. However, its role is also to contain and limit the flow of electrolytes due to capillarity of the electrolytic conductor bridge 34. Therefore, is useful to control the baseline and stability of the response. It must be noted that in some embodiments, the coating might be applied on the whole front electrode 31 surface, while in other embodiments, the front electrode 31 can be partially coated to provide a desired response. Also note that although in Fig. 3 only the frontside of the front electrode 31 is coated, in other embodiments the coating 324 can be also applied on other exposed areas of the front electrode 31, such as the sides. A casing 302 ensures that the electrolytic conductor bridge 34 and the back electrode 36 are not exposed to the fluid solution 322. The casing may be formed by any means that has waterproof features, so that the fluid solution 322 can only reach the electrolytic conductor bridge 34 and the back electrode 36 through the porous front electrode 31.

In another preferred embodiment of the first aspect of the invention or of any of its preferred embodiments, the front electrodes and the one or more back electrodes of the electrochemical sensor or multiplex electrode are made of the same material, preferably platinum. It is again noted that using two electrodes made of the same material without the need for different solutions it's not trivial as electrochemical sensors need different environments on each half-cell to ensure there is a different electrochemical state in each electrode, so that the presence and/or concentration of the target analyte can be determined. Once again, this is possible as the electrolytic conductor bridge ensures the environment of the hydrogen peroxide sensitive surface of the front electrodess and the back electrode are different.

In a preferred embodiment of the hydrogen peroxide sensitive embodiments or of any of their preferred embodiments (from hereinafter referred as "first functionalised embodiment"), one or more of the front electrodes of any of the hydrogen-peroxide sensitive sensors (current-based or potential-based) is functionalized with an oxidase or dehydrogenase enzyme selected from the group consisting of glucose oxidase, glucose dehydrogenase, cholesterol oxidase, cholesterol dehydrogenase, lactate oxidase, lactate dehydrogenase, bilirubin oxidase, bilirubin dehydrogenase, amino acids oxidase and amino acids dehydrogenase; configured to produce hydrogen peroxide when in contact with the target analyte that the electrochemical sensor measures. It is noted that this allows the sensor to be used, for example, to selectively and directly determine the concentration of hydrogen peroxide in any type of industrial, natural or biological fluid. A biological fluid may preferably be undiluted whole blood, intracellular fluids, saliva blood sera and urine or any suitable buffer or problem solution. In particular, said selective and direct determination of the concentration of hydrogen peroxide in an aqueous solution in turn determines the presence and/or concentration of glucose, galactose, cholesterol, uric acid, lactic acid and amino acids in said solution.

In another preferred embodiment of the hydrogen peroxide sensitive embodiments or of any of their preferred embodiments (from hereinafter referred as "second functionalised embodiment"), a sensor system comprises the hydrogen-peroxide sensitive sensor (current-based or potential-based), and the electrochemical sensor (preferably the front electrode) is functionalised with a capture entity that directly captures the target analyte or indirectly captures the target analyte through another capture entity which is capable of targeting the analyte and is labelled with a molecule capable of binding the capture entity functionalizing the electrochemical sensor.

It is noted that the capture entity may be any entity, such as an antibody, antigen, antibody-like entity, nucleic acids (DNAs, RNAs and their different forms), biotin, streptavidin or the like, that directly or indirectly captures the target analyte.

In a preferred embodiment of the second functionalised embodiment, the system further comprises means for detecting the target analyte wherein said means are at least a detection entity and a substrate and wherein said detection entity is capable of detecting the target analyte and is labelled with an enzyme capable of producing hydrogen peroxide when exposed to the substrate. It is noted that this allows the sensor to be further used, for example, to selectively and directly label biomolecules. The detection entity may be any entity, such as an antibody, antigen or antibody-like entity that further comprises a detection molecule such as an enzyme or any label that, when exposed to a substrate that is its precursor, produces a reaction whose products can be detected.

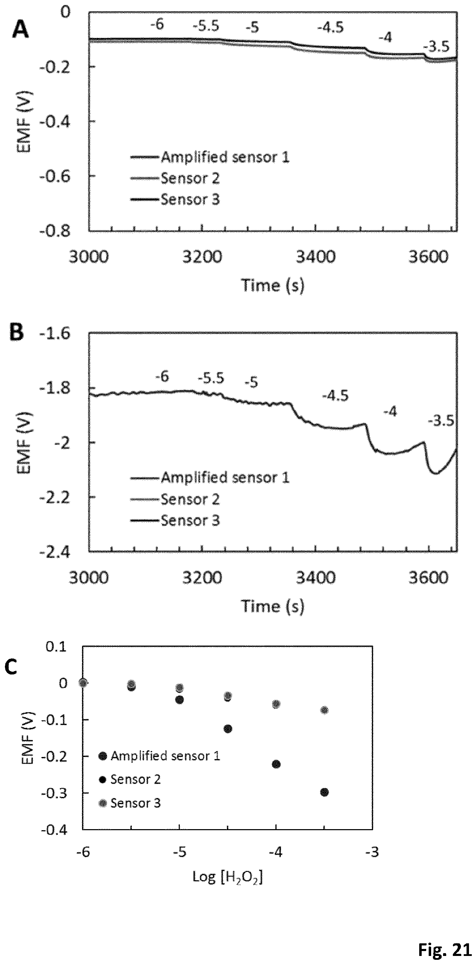

A second aspect of the invention refers to a hydrogen-peroxide sensitive sensor (current-based or potential-based), as defined in the first aspect or in any of its preferred embodiments, connected to one or more transistors for reading potentials such as a JFET or a MOSFETs (please refer to figures 20 and 21). Such transistors can effectively amplify the signal. In a preferred embodiment of the second aspect of the invention, the transistors, such as MOSFETs, can either enhance the signal or provide a more elaborated signal by adding operational amplifiers. In this sense, a preferred embodiment of the second aspect of the invention refers to a hydrogen-peroxide sensitive sensor (current-based or potential-based), as defined in the first aspect or in any of its preferred embodiments, which comprises multiple chemical sensors (front electrodes) for concurrently detecting a chemical reaction within the same, operationally associated reaction region. The multiple sensors can provide redundancy, as well as improved accuracy in detecting characteristics of the chemical reaction. Another preferred embodiment of the second aspect of the invention refers to a hydrogen-peroxide sensitive sensor (current-based or potential-based), as defined in the first aspect or in any of its preferred embodiments, which comprises different sets of multiple chemical sensors (front electrodes) each one of these sets detects the same or different chemical reactions within the same, operationally associated reaction region.

As described in the present invention, by utilizing multiple chemical sensors to separately detect the same chemical reaction, the individual output signals can be combined or otherwise processed to produce a resultant, low noise output signal. For example, the individual output signals can be averaged, such that the signal-to-noise ratio (SNR) of the resultant output signal is increased by as much as the square root of the number of individual output signals. In addition, the resultant output signal can compensate for differences among the values of the individual output signals, caused by variations in chemical sensor performance which could otherwise complicate the downstream signal processing. As a result of the techniques described herein, low-noise chemical sensor output signals can be provided, such that the characteristics of reactions can be accurately detected.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

Some embodiments may be implemented, for example, using a computer-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The computer-readable medium or article may include, for example, any suitable type of memory unit, memory device, memory article, memory medium, storage device, storage article, storage medium and/or storage unit, for example, memory, removable or non-removable media, erasable or non-erasable media, writeable or rewriteable media, digital or analog media, hard disk, floppy disk, read-only memory compact disc (CD-ROM), recordable compact disc (CD-R), rewriteable compact disc (CD-RW), optical disk, magnetic media, magneto-optical media, removable memory cards or disks, various types of Digital Versatile Disc (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

A third aspect of the present invention refers to a method of determining the presence and/or concentration of a target analyte in one or more aqueous solutions, the method comprising:
a. contacting the one or more aqueous solutions with the sensitive surface of the hydrogen-peroxide sensitive sensor (current-based or potential-based), as defined in the first or second aspects of the invention or in any of its preferred embodiments;
b. determining the difference in the electrochemical state between each of the front electrodes and/or the operationally associated front electrodes and the one or more back electrodes; and
c. determining the presence and/or concentration of the analyte/s in the one or more aqueous solutions based on the difference in the electrochemical state.

It must be noted that the aqueous solution does not necessarily need to percolate to the back electrode in order for any of the methods of the third aspect of the invention to work; but if the sensor is already wet by a supporting electrolyte (background ionic solution), it is enough for the aqueous solution to reach the electrolytic conductor bridge and close the electrical circuit.

In a preferred alternative embodiment of the third aspect of the invention or of any of its alternative embodiments of any of their preferred embodiments, before the sensitive surface of the front electrodes of the sensor is contacted with the one or more aqueous solutions, it is previously contacted with a background ionic solution that saturates the electrolytic conductor bridge and back electrode. The background ionic solution may be the same aqueous solution as the one under test or any other buffer or solution. It must be noted that this embodiment is extensive to all of the possible embodiments of the second aspect of the invention including those wherein the sensor is functionalised in any way.

In a preferred embodiment of this third aspect of the invention, the aqueous solution is a biological fluid previously obtained from a subject, preferably a mammal, more preferably from a human being. The sample such as blood is preferably undiluted whole blood, intracellular fluids, saliva blood sera and urine or any suitable buffer or problem solution. Said selective and direct determination of the presence and/or concentration of an analyte in the aqueous solution is based on the difference in the electrochemical state produced by the presence of said analyte in the working electrode of the electrochemical sensor.

In a further preferred embodiment of this third aspect of the invention or of any of its preferred embodiments, said biological sample is a blood, plasma or serum sample isolated from a subject, preferably a mammal, more preferably from a human being. The determination of presence and/or concentration of hydrogen peroxide further determines the presence and/or concentration of the precursors of the hydrogen peroxide in the biological sample. This can allow to detect reactive oxygen species (ROS) in some metabolic disorders and cancer, or in case an enzymatic or labelled reaction is carried out separately; or in an automated flow system, etc. the sensor can be used simply to the detect the presence of peroxide.

An alternative embodiment of the third aspect of the invention refers to a method of determining the presence and/or concentration of one or more target analytes in one or more aqueous solutions through the measurement of hydrogen peroxide, the method comprising:
a. contacting the aqueous solution with the sensitive surface of the hydrogen-peroxide sensitive sensor (current-based or potential-based), of the first functionalised embodiment of the first or second aspect of the invention;
b. determining the difference in the electrochemical state between each of the front electrodes and/or the operationally associated front electrodes and the back electrode;
c. determining the presence and/or concentration of the hydrogen peroxide in the aqueous solution based on the difference in the electrochemical state; and
d. determining the presence and/or concentration of the target analyte in the aqueous solution based on the determined concentration of hydrogen peroxide.

In a preferred embodiment of this alternative embodiment of the third aspect of the invention, the electrochemical sensor for selectively measuring a target analyte in an aqueous solution is used in an aqueous solution which is any type of industrial, natural or biological fluid. Biological fluids may be previously obtained from a subject, preferably a mammal, more preferably from a human being. A biological fluid may preferably be undiluted whole blood, intracellular fluids, saliva blood sera and urine or any suitable buffer or problem solution comprising any of these. Said selective and direct determination of the concentration of hydrogen peroxide in an aqueous solution in turn determines the presence and/or concentration of glucose, galactose, cholesterol, uric acid, lactic acid, bilirubin or amino acid in said solution as well as any other analytes present in said solution as known in the art.

In a further preferred embodiment of this alternative embodiment of the third aspect of the invention or of any of its preferred embodiments, said biological sample is a blood, plasma, serum sample or any other sample isolated from a subject, preferably a mammal, more preferably from a human being; or a buffer wherein said sample is contained.

A further alternative embodiment of the third aspect of the invention refers to method for determining the presence and or concentration of a target analyte in an aqueous solution wherein the method comprises:
a. contacting the aqueous solution with the sensitive surface of the front electrode of an electrochemical sensor as defined in any of the second functionalised embodiments of the first aspect of the invention so that the capture entity binds directly or indirectly to the target analyte if present;
b. contacting the sensitive surface of the front electrode of the electrochemical sensor of step a) with a detection entity so that the detection entity binds to the target analyte if present;
c. optionally rinsing the sensitive surface; and adding the substrate so as to produce hydrogen peroxide if the labelled detection entity is present;
d. determining the difference in the electrochemical state between the front electrode and the back electrode; and
e. determining the presence and/or concentration of the target analyte in the aqueous solution based on the difference in the electrochemical state.

Another further alternative embodiment of this third aspect of the invention refers to method for determining the presence and or concentration of a target analyte in an aqueous solution wherein the method comprises:
a. contacting the aqueous solution with the sensitive surface of the front electrode of an electrochemical sensor as defined in any of the second functionalised embodiments of the first aspect of the invention so that the capture entity binds directly or indirectly to the target analyte if present;
b. contacting the sensitive surface of the front electrode of the electrochemical sensor of step a) with the detection entity so that the detection entity binds to the target analyte if present;
c. optionally rinsing the sensitive surface; and adding the substrate so as to produce hydrogen peroxide if the labelled detection entity is present;
d. determining the difference in the electrochemical state between the front electrode and the back electrode; and
e. determining the presence and/or concentration of the hydrogen peroxide in the aqueous solution based on the difference in the electrochemical state; and
f. determining the presence and/or concentration of the target analyte in the aqueous solution based on the determined concentration of hydrogen peroxide.

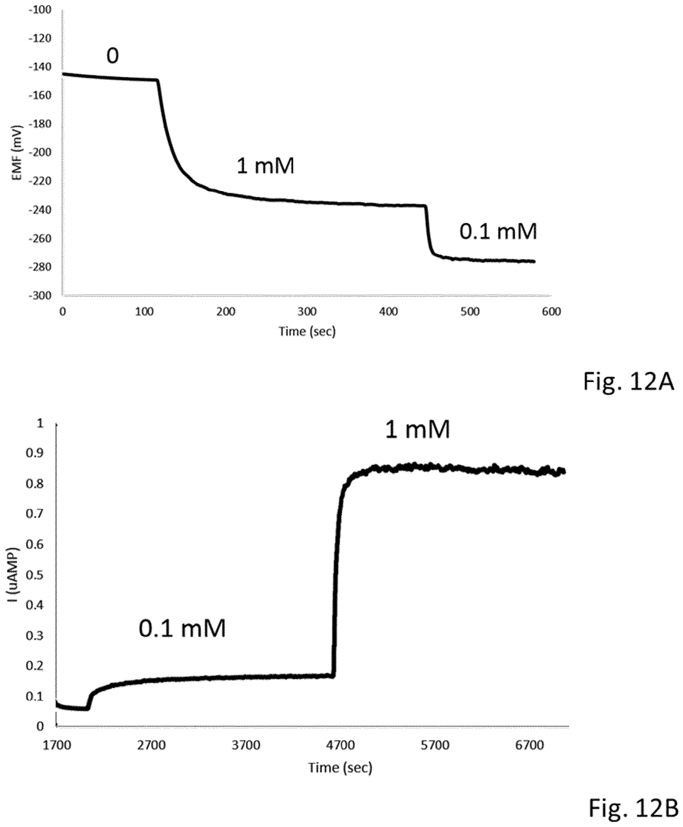

In a preferred embodiment of any of these further alternatives of the second aspect of the invention, the method is part of a method based on labelling nucleic acids, such as genosensor using enzyme labelled DNA or RNA (in any of their forms) and in any labelled assay producing hydrogen peroxide including enzyme-labelled immunoassays as enzyme linked immunosorbent assay (ELISA), blot methods including dot, northern, southern and western blot, lateral flow tests and glucose oxidase (GOx) labelled methods, as well as other related technique as known in the art; wherein a hydrogen peroxide releasing enzyme, such as oxidase or dehydrogenase are employed. Therefore, spectroscopic detection methods could be substituted by an electrochemical detection method using a sensor as described in the first aspect of the invention. For example, a particular analyte (such as glucose) is tagged with an antibody that contains magnetic nanoparticles that are attracted to the working electrode, and furthermore with another antibody with one of these enzymes (such as glucose oxidase). Then the solution with the tagged analyte would be exposed to the electrochemical sensor and under an aqueous solution, the enzyme would liberate hydrogen peroxide which the electrochemical sensor can detect to determine its presence and/or concentration. Example 4 shows the use of this method in an ELISA for IgG based on GOx labelled antibodies. Figure 12 shows a time-trace potential reading of a single electrode after the immunoreaction and the GOx-labelled antibody.

ELISAs, according to the present invention, are typically performed in 96-well (or 384- well) polystyrene plates, which will passively bind the at least one protein or fragments thereof. The binding and immobilization of reagents makes ELISAs simple to design and perform. Having the reactants of the ELISA immobilized to the microplate surface enables easy separation of bound from non-bound material during the assay. This ability to wash away non-specifically bound materials makes the ELISA a powerful tool for measuring specific analytes within a crude preparation. The sensor system when in use for ELISA comprises optionally one or more of the following preparation reagents: blocking reagents for unbound sites to prevent false positive results; anti-(species) IgG, IgM and/or IgA conjugated to a label, preferably an enzyme; and substrates that react with the label, preferably the enzyme, to indicate a positive reaction. In addition to the procedure reagents, additional reagents such as wash buffers, stop solutions and stabilizers can enhance the quality of the ELISA assay.

In still another preferred embodiment of any of these further alternative second aspect of the invention or of any of its preferred embodiments, said method is an in vitro diagnostic method for the detection of a virus or bacteria or the presence of antibodies against a virus in a subject, wherein said subject is preferably a mammal, more preferably a human being, and wherein said subject is diagnosed as having antibodies against the virus if an antigen-antibody complex between said virus protein or said fragment and an antibody present in said biological sample is detected.

In still another preferred embodiment of any of these further alternative second aspects of the invention or of any of its preferred embodiments, said method is an in vitro method for screening individuals having antibodies against the virus from those not having antibodies against the virus.

In a preferred embodiment of any of the second aspect of the invention or of any of its preferred embodiments (from hereinafter referred as "immersed method"), the aqueous solution is contacted to the front electrode of the electrochemical sensor by immersing the sensor in the solution. It is noted that, in this use the amount of solution put in contact with the front electrode so that said solution percolates to the back electrode. It is further noted that, the sensor may be immersed in many different positions, with the exposed front electrodes facing upwards, downwards or laterally, and in that any case the electrolytic conductor bridge and the back electrode are completely isolated from the solution and can only get in touch with the solution percolated through the front electrode.

In a preferred embodiment of the immersed method, the aqueous solution is obtained through a needle previously inserted in a subject, preferably a mammal, more preferably in a human being; and analysed within it. The sample of the aqueous solution such as blood is preferably undiluted whole blood, preferably undiluted whole blood, intracellular fluids, saliva blood sera and urine or any suitable buffer or problem solution. Said selective and direct determination of the concentration of hydrogen peroxide in an aqueous solution in turn determines the presence and/or concentration of glucose, galactose, cholesterol, uric acid, lactic acid, bilirubin or amino acid in said solution as well as any other analytes present in said solution as known in the art.

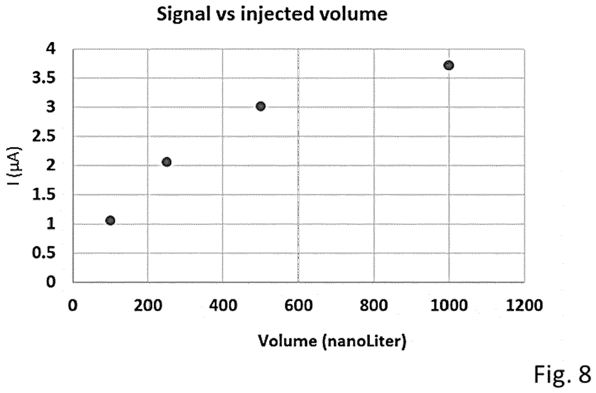

In a preferred alternative embodiment of any of the second aspect of the invention or of any of its preferred embodiments (from hereinafter referred as "single volume method"), one or more aqueous solutions are contacted to the front electrodes of the electrochemical sensor or multiplex electrode by adding a single volume of the solutions to the sensor. Said volume may be a single drop, two drops or any number of drops so that a minimum current can be registered of the solution. It is noted that, in this method the amount of solution in contact with the front electrodes is such that a response is generated. If the sensor is dry, the amount must sufficient so that said solution percolates to the back electrode. On the other hand, if the sensor has been previously exposed to a supporting electrolyte and this has percolated and reached the back electrode providing a stable current, a smaller amount of problem solution in the nL scale can be used, as shown in Fig. 8.

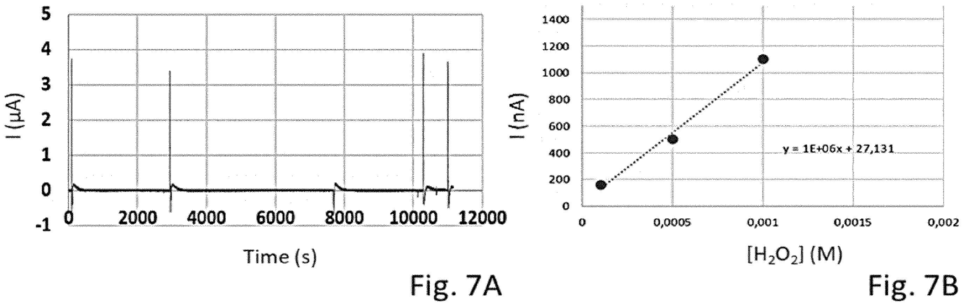

It is further noted that, the sensor may be in many different positions, with the exposed front electrodes facing upwards, laterally or even downwards, and in that any case the electrolytic conductor bridge and the back electrode are completely isolated from the aqueous solution and can only get in touch with the solution percolated through the front electrode. It is particularly important to highlight that this method, according to the present configuration, allows detection in reduced volumes as shown in Fig. 7. The method is preferably performed in a single drop, where at least 100nL of peroxide is content in the solution. Noteworthy further reduction of volume down to the nL scale is possible based on the geometry optimization. The current signal obtained for different injected volumes can be seen in Fig. 7. In a similar way, the response of the system to these small amounts can be in the 100-millisecond time scale, is possible based on the geometry optimization. Furthermore, there are no interference due to ascorbic acid in when using this configuration.

In a preferred embodiment of the single volume method, a single drop or several drops of an aqueous solution obtained through a needle previously inserted in a subject, preferably a mammal, more preferably in a human being is exposed to the electrochemical sensor. The sample such as blood is preferably undiluted whole blood, intracellular fluids, saliva blood sera and urine or any suitable buffer or problem solution. Said selective and direct determination of the concentration of hydrogen peroxide in an aqueous solution in turn determines the presence and/or concentration of glucose, galactose, cholesterol, uric acid, lactic acid, bilirubin or amino acid in said solution as well as any other analytes present in said solution as known in the art.

In another preferred alternative embodiment of any of the second aspect of the invention or of any of its preferred embodiments (from hereinafter referred as "continuous flow method"), the aqueous solution is contacted to the front electrode of the electrochemical sensor by exposing the sensor to a continuous flow of the solution. It is noted that, in this method the amount of solution required to be in contact with the front electrode is reduced as long as the there is an initial supporting electrolyte that percolates to the back electrode. This is because when the sensor is already saturated in a buffer, the circuit is closed through contact with the electrolyte solution. Therefore, in the continuous flow method the aqueous solution may first percolate the front electrode and reach the back electrode if the sensor is dry. From thereon, a smaller amount would be needed. Alternatively, the sensor may be previously saturated with an electrolyte solution that closes the circuit, and the aqueous problem solution only need to be in contact with the front electrode for the sensor to work.

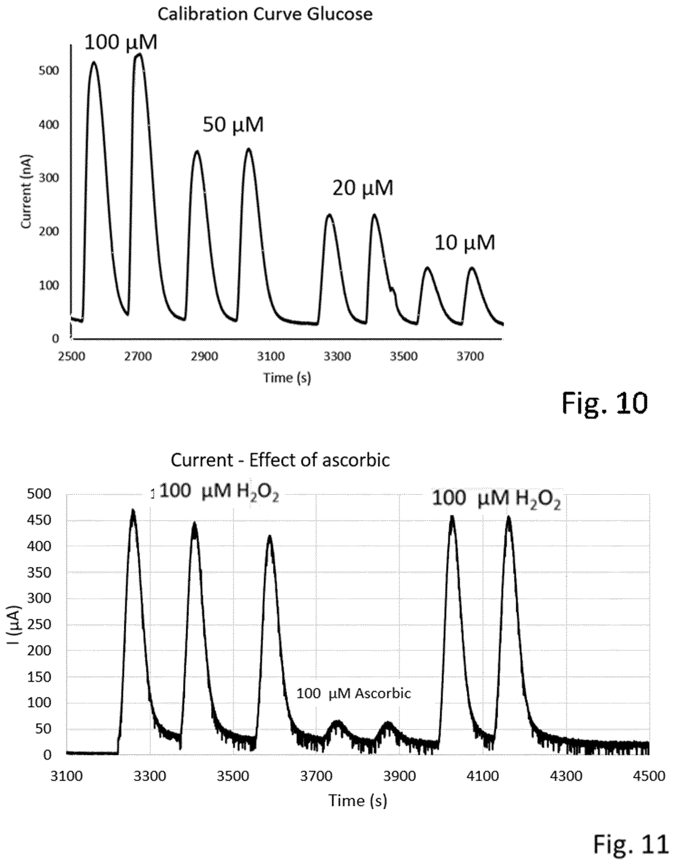

It is further noted that, the sensor may be in many different positions, with the exposed front electrodes facing upwards, laterally or even downwards, and in that any case the electrolytic conductor bridge and the back electrode are completely isolated from the aqueous solution and can only get in touch with the solution percolated through the front electrode. It has been shown that unlike the immersed method, wherein typical sensitivities in the order of 40 mV/decade; in this continuous flow method sensitivities in the order to 150 mV/decade are obtained (see Fig. 10) and the sensor is not affected by the ascorbic interference as shown in Fig. 11.

For the detection of the presence and/or concentration of hydrogen peroxide, and the indirect detection target analytes (biomolecules), wherein peroxide can be obtained through a reaction catalysed by oxidase enzymes, the method is preferably performed in continuous flow of buffer solution, where at least peroxide with 1µM concentration is content in the solution. Noteworthy further reduction of volume down to the nL scale is possible based on the geometry optimization. In a similar way, the response of the system to these small amounts can be in the 100-millisecond time scale, is possible based on the geometry optimization. Results are comparable to those in already disclosed two-electrode self-powered sensors. Furthermore, there are no interferences due to ascorbic acid in when using this configuration.

In a preferred embodiment of the continuous flow method, the front electrode is introduced into a subject, preferably a mammal, more preferably a human being. Said selective and direct determination of the concentration of hydrogen peroxide in an aqueous solution in turn determines the presence and/or concentration of glucose, galactose, cholesterol, uric acid, lactic acid, bilirubin or amino acid in said solution as well as any other analytes present in said solution as known in the art. The continuous flow method can allow for real-time measurements of presence and/or concentration of said metabolites in the user. In particular, the use of the continuous flow method can allow for real-time continuous measurements of the presence and/or concentration of said metabolites in the user. A use of this method for a glucose self-powered sensor using the continuous flow method can be seen in Example 3.

In another preferred embodiment of the continuous flow method or of any of its preferred embodiments, the electrochemical sensor for selectively measuring a target analyte in an aqueous solution is used in an organic electrochemical transistor. The macroporous electrode is layered on top of the transistor's channel and can be used as a gate. In a further preferred embodiment of the continuous flow method in an organic electrochemical transistor, the transistor is part of a glucose sensor wherein upon the detection of glucose, the transistor changes its state and allows for a further change of state of the system the transistor forms part of, and perform other actions, such as providing an insulin shot.

In a still further preferred embodiment of the continuous flow method or of any of its preferred embodiments, the electrochemical sensor is sensitive to glucose and is part of an organic electrochemical transistor or a glucometer, wherein the front electrode is introduced into a subject, preferably a mammal, more preferably a human being. Said selective and direct determination of the concentration of hydrogen peroxide in an aqueous solution in turn determines the presence and/or concentration of glucose. In this embodiment the detection of glucose can be performed in real-time and continuously.

In preferred embodiment of the second aspect of the invention or of any of its preferred embodiments, the porous sensitive surface of the front electrode support is formed by sputtering an electroactive material and/or applying nanoparticles of the electroactive material over the front electrode support. It is of importance that the electroactive materials remain thin, so that it doesn't affect the micron size pores of the paper. Also, other forms of depositing small layers of the electroactive material such as electrodeposition, drop-casting, conductive inks, composites and other as known in the art that allow the percolation of the aqueous solution can be used.

It must be noted that the direct detection of peroxide is complex. The materials that can be used have to be operated at a working potential that makes the susceptible of serious interferences by redox-active species, such as ascorbic acid. In this respect the present invention offers remarkable advantages. When the sensor is immersed the typical interference of ascorbic acid affects the performance. Nevertheless, when the system is operated in the open flow cell mode, the response to ascorbic acid is almost eliminated. Fig. 11 compares the response of a 100 µM peroxide solution and 100 µM ascorbic acid. This is the maximum level normally found in blood, and it is used to evaluate the interference of this substance. In a conventional system, this interference will seriously affect the electrode response. In this case, the interference is negligible.

This can be partly explained by the low difference of potential at which the electrodes are working. Also, in porous electrodes the structure of the concentration gradients plays a key role on the electrochemical response. In this case, when the working electrode is exposed to air, the electrochemical interface becomes a complex system where the interplay of a thin layer of liquid, air, hydrated cellulose and the metal are involved. Thus, this macroporous electrode creates a unique interface that enhance the response to peroxide and reduces the negative effect of interferences.

The following examples merely illustrate the present invention and do not limit the same.

### Examples

### Materials and methods

In this invention, a new cell geometry using metal-sputtered papers in working and reference electrodes, and a Nafion^{®} membrane as a conductive media, is applied in the construction of a paper-based electrochemical all-solid-state sensor for hydrogen peroxide detection, i.e. the biomarker of the oxidase enzyme reaction as well as, for glucose as a model biomarker. Nafion^{®} is a commercial product of the ionomer tetrafluoroethylene-perfluoro-3,6-dioxa-4-methyl-7-octenesulfonic acid copolymer.

### Experimental section

Reagents. Nafion^{®} 117 solution (10% in a mixture of lower aliphatic alcohols and water); glucose oxidase (GOx) (from Aspergillus niger type X-S, lyophilized powder (100,000 - 250.000 units/g) D-glucose); hydrogen peroxide (30 wt. % in water) and D-Glucose (Glu) were purchased from Sigma-Aldrich. Phosphate buffer saline (PBS) pH=7.4 (0.1 M NaCl, 0.003 M KCI, 0.1 M Na₂HPO₄, 0.02 M K₂HPO₄) were prepared using 18.2 MΩ cm-1 double deionized water (Milli-Q water systems, Merck Millipore). IgG, Anti (IgG) and Anti (IgG) GOx labelled were purchased from Abcam (UK).

Sputtered platinum paper. Whatman^{®} Grade 5 qualitative filter paper circles were coated with Pt using a radiofrequency sputtering process (ATC Orion 8-HV, AJA International) operated at 3 mTorr, for 65 s at 200 W.

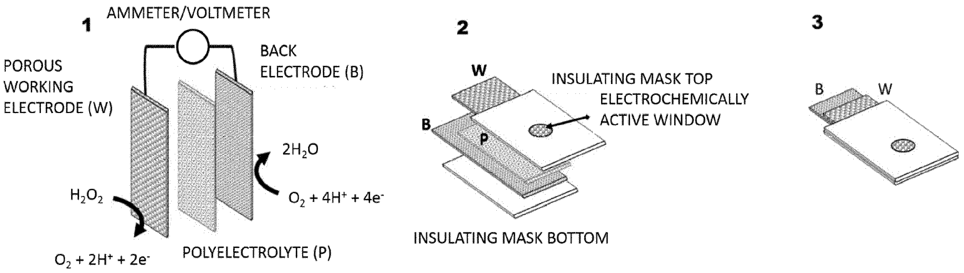

Paper sensor construction (Figure 5). Two conductive paper strips are used, namely: the front (upper) strip (made with a conductive material-sputtered paper) acts as WE (working electrode); the back (lower) strip is a conducting paper that acts as reference electrode (RE). WE and RE are glued using a drop of Nafion^{®} 10% (sandwiched between the plastic masks). An orifice on the upper plastic mask leaves exposed the electrochemically active area of the front electrode. Typically, the radius of this circular window is 1.5 mm. Finally, a drop of Nafion^{®} 5 % is located over the electrochemically active window, covering the exposed area of the WE. In all cases the conductive paper strips were cut with a width of 0.4 cm.

### Results

### Example 1: Determination of best electrode material

Figure 4 shows a table summarizing the performance results from different configuration. In the conventional amperometric cell configuration, seven types of electrode materials configurations were tested. It must be noted, that under this configuration, the present electrode was not in use, but a conventional setup was employed for the solely purpose of determining each material performance. It also must be noted that performance values under this configuration are intended to show proof of principle, since different experimental conditions (electrode size, supporting electrolyte, etc) may yield different performance.

It was shown that as there is a response when measuring hydrogen peroxide directly with platinum electrodes, even when using commercial screen-printed Pt electrodes either as working or counter, so it is not just something unique of paper-based electrodes. Also, it was proven that Au is not a suitable material for electrodes in this configuration as none of the systems provided a response. Silver electrode gets clearly worn out, and zinc creates a very large baseline current, that makes difficult to control de system. Finally, CNT electrodes do not provide a response.

It was therefore shown that it is possible to use Pt for the direct (i.e., no redox mediators), self-powered electrochemical detection of hydrogen peroxide in solution. Also, common materials in amperometric sensors are not suitable for this configuration.

### Example 2: Hydrogen peroxide detection in solution, in drop and in continuous flow

To analyse the detection of hydrogen peroxide detection in different configurations, the conductive material sputtered on the paper support was platinum.

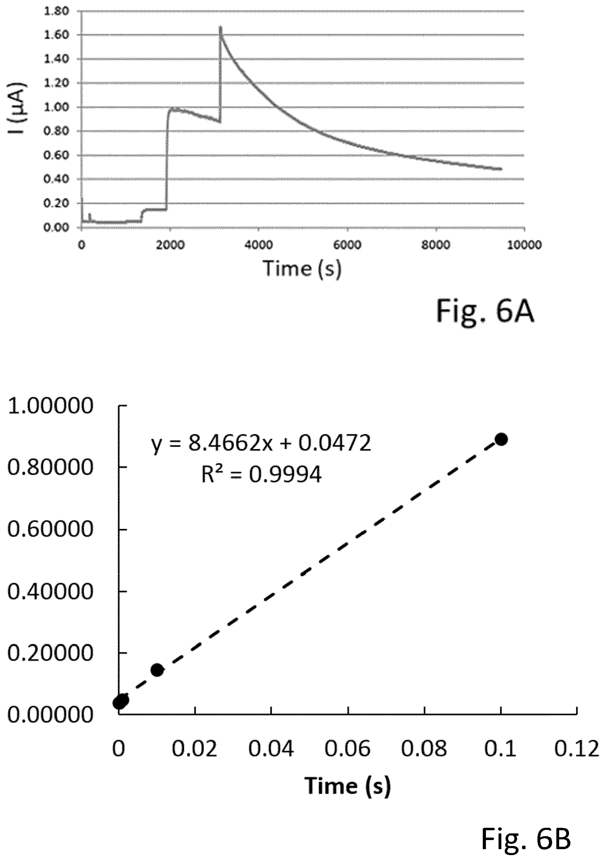

Figure 6A shows the response for the electrochemical sensor when immersed in a solution of H₂O₂. The additions give a positive response (from 0.04 to 1.65µA) with a sensitivity of 8.4 µA per mM of HzOz in the linear range from 0.001 to 0.1 mM of H₂O₂ (Figure 6B reports the corresponding calibration curve). Importantly, these results confirmed that the proposed amperometric cell -using a single exposed electrode configuration, with the front electrode being porous to the solution- effectively closes the circuit and allows detecting H₂O₂ in solution. It further confirmed that it is possible to detect H₂O₂ in solution using two electrodes (front and back) from the same material. To the best of our knowledge, this is the first report for this kind of configuration for the detection of chemical species in solution.

Moreover, the proposed configuration allows detection in reduced volume. Figure 7A shows the response for the electrochemical sensor when a single volume is contacted to its front electrode. The detection was performed in a single drop of 100 to 1000 nL reducing the sample size, which is crucial, for example, in blood fingerprick or in wearable. Noteworthy further reduction of volume down to the single µL was possible based on the geometry optimization. The current signal obtained for different injected volumes can be seen in Figure 8. Analytical figures are comparable to the ones in solution although with a shifted linear range. The sensitivity here was 100 nA/mM in the 0.1-1mM linear range (Figure 7B reports the corresponding calibration curve). It is noted that this sensibility is up to 5 times higher than other sensors in single volume analysis which is a remarkable increase. As mentioned before, this is explained by the macroporosity of the working electrode, which increases the exposed surface and promotes the diffusion of atmospheric oxygen facilitating chemical interactions. Furthermore, extremely fast response was observed, in the 100-millisecond time scale. To the best of our knowledge, this is the first report for this kind of configuration for the detection of chemical species in a single volume.

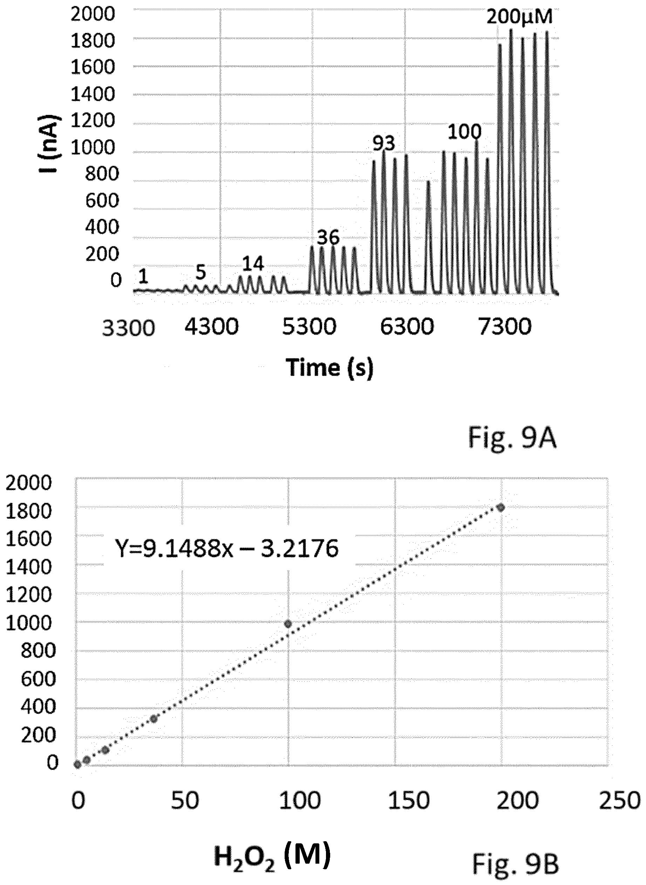

A final application of the configuration of the electrochemical sensor is the detection in a continuous flow such as shown in Figure 9A. The detection was performed in a continuous flow of buffer solution at 100 µL/min (1,6µL/s), where 20 µL injection of peroxide at different concentrations were performed. Results showed extremely good stability of the baseline, high level of reproducibility of the signal, very good sensitivity and limit of detection with a low sample volume required. The sensitivity was of 9nA/ µM with a linear range for 1 to 200µM (Figure 9B reports the corresponding calibration curve). The sensor was calibrated at different low concentrations varying from 1 to 6 µM providing exquisite stability, sensitivity and reproducibility (RSD < 5% under optimal conditions). These results showed that this configuration could be applied to continuous flow systems, wherein one of the main channels is to incorporate 3 electrodes simultaneously in a single flow channel. This configuration opens the window to provide either smaller electrodes or more sensitive ones while simplifying current designs. Furthermore, there are no interference due to ascorbic acid in when using this configuration as seen in Figure 11. To the best of our knowledge, this is the first report for this kind of configuration for the detection of chemical species in continuous flow.

### Example 3: Glucose detection

In addition, a glucose current based sensor was built: GOx enzyme was entrapped in the first layer of Nafion^{®} so that it catalyses the oxidation of glucose added to the solution producing HzOz, which is detected by the working electrode. Figure 10 shows the time trace of a glucose self-powered sensor in flow with the corresponding glucose concentration injected. Outstanding detection was given in the 10-100 µM range. Thus, these results confirm that the new configuration could be used for real application having an analytical performance similar to other reported glucose biosensors.

### Example 4: ELISA for IgG based on Antibody GOx labelled

In addition to hydrogen peroxide and glucose detection, an immunoreaction was detected. A first antibody was immobilized onto the Nafion^{®} coating of the front electrode, then IgG was added to the sensor (1 µg/mL) and eventually the antibody labelled with GOx. After suitable washing procedure, Figure 12 shows the detection upon consecutive addition of 0.1 and 1 mm Glucose in PBS. Figure 12A displays the time-trace potential reading of a single electrode after the immunoreaction and the GOx-labelled antibody. Figure 12B shows the time-trace current reading of a single electrode after the immunoreaction and the GOx-labelled antibody. From these experiments, it is showed that label-based reactions can be detected.

## Claims

1. A method of determining the presence and/or concentration of hydrogen peroxide in one or more aqueous solutions (122) using an electrochemical sensor (10) comprising:
i. two or more front electrodes (11) comprising pores permeable to the aqueous solution (122) and comprising a sensitive surface (12) to the hydrogen peroxide;
ii. one or more electrolytic conductor bridges (14) permeable to the aqueous solution (122); and
iii. one or more back electrodes (16) comprising at least a surface and optionally a support (13);
wherein the front electrodes (11) are electrically connected via the one or more electrolytic conductor bridges (14) to the one or more back electrodes (16); wherein the front electrodes (11) comprises pores above 0.2 µm of equivalent diameter that connect the external surface of the front electrode (11) and the one or more electrolytic conductor bridges (14);
wherein the sensitive surface (12) of the front porous electrodes is a hydrogen peroxide sensitive surface (12) and is selected from any of the following list consisting of: copper, nickel, Prussian blue-coated materials, Prussian blue-coated composites, palladium, palladium nanomaterials and platinum or platinum derivatives such as black platinum and platinum nanomaterials;
wherein the electrochemical sensor (10) is configured so that the one or more aqueous solutions (122) enters in contact with the one or more back electrodes (16) through the one or more electrolytic conductor bridges (14), which in turn enters in contact with the one or more aqueous solutions (122) through the pores of the front electrodes (11);
wherein the electrochemical sensor (10) further comprises means (18) for determining the difference in the electrochemical state between the front electrodes (11) and the one or mor back electrodes (16); and wherein the determination of such difference in the electrochemical state indicates the hydrogen peroxide presence and/or concentration in the aqueous solution (122);

2. The method according to claim 1, wherein the two or more front electrodes (11) are electrically connected via the one or more electrolytic conductor bridges (14) to a back electrode (16).

3. The method according to claim 1, wherein the two or more front electrodes (11) are electrically connected via an electrolytic conductor bridge (14) to a back electrode (16).

4. The method according to any one of claims 1 to 3, wherein two or more of the front electrodes are operationally associated, wherein operationally associated is understood as two or more front electrodes being electrically interconnected to the same back electrode for determining a difference in the electrochemical state.

5. The method according to any one of claims 1 to 4, wherein the electrochemical sensor is a hydrogen-peroxide sensitive sensor, and wherein the hydrogen-peroxide sensitive sensor is current-based or potential-based sensor.

6. The method according to claim 5, wherein the hydrogen-peroxide sensitive sensor (current-based or potential-based) comprises a set of multiple chemical sensors (front electrodes) for concurrently detecting a chemical reaction within the same operationally associated reaction region.

7. The method according to claim 5, wherein the hydrogen-peroxide sensitive sensor (current-based or potential-based) comprises different sets of chemical sensors (front electrodes), wherein each of these sets comprises multiple chemical sensors (front electrodes) operationally associated to each other, and wherein each one of these sets detects the same or different chemical reactions within the same operationally associated reaction region.

8. The method according to any one of claims 1 to 7, wherein the signal of the electrochemical sensor, preferably the hydrogen-peroxide sensitive sensor (current-based or potential-based), can be modulated by coupling additional electronic components such as transistors.

9. The method according to claim 8, wherein the electrochemical sensor is a hydrogen-peroxide sensitive sensor (current-based or potential-based) which comprises multiple chemical sensors (front electrodes) for concurrently detecting a chemical reaction within the same, operationally associated reaction region, wherein the individual output signals are combined or otherwise processed to produce a resultant low noise output signal.

10. The method according to claim 8, wherein the electrochemical sensor is a hydrogen-peroxide sensitive sensor (current-based or potential-based) which comprises multiple chemical sensors (front electrodes) for concurrently detecting a chemical reaction within the same operationally associated reaction region, wherein the individual output signals are combined or otherwise processed through logical circuits.

11. The method according to claim 8, wherein the electrochemical sensor is a hydrogen-peroxide sensitive sensor (current-based or potential-based) which comprises different sets of chemical sensors (front electrodes), wherein each of these sets comprises multiple chemical sensors (front electrodes) operationally associated to each other, and wherein each one of these sets detects the same or different chemical reactions within the same, operationally associated reaction region, wherein the individual output signals of each of these sets is combined or otherwise processed through logical circuits.

12. The method according to any of claims 1 to 11, wherein the electrochemical surfaces (12) of the front electrodes (11) and the one or more back electrodes (16) comprise or are made of platinum.

13. The method according to any of claims 1 to 12, wherein the one or more electrolytic conductor bridges (14) are made of tetrafluoroethylene-perfluoro-3,6-dioxa-4-methyl-7-octenesulfonic acid copolymer.

14. The method according to any of the claims 1 to 13, wherein the front electrodes (11), the one or more electrolytic conductor bridges (14) and the one or more back electrodes (16) of the electrochemical sensor (10) are configured so that these are stacked, and preferably they are vertically stacked.
